(19) Europäisches Patentamt / European Patent Office / Office européen des brevets

(11) **EP 4 692 899 A1**

(12) **EUROPEAN PATENT APPLICATION**

(43) Date of publication:
**11.02.2026  Bulletin 2026/07**

(21) Application number: **25175354.7**

(22) Date of filing: **09.05.2025**

(51) International Patent Classification (IPC):
**G02B 27/01** (2006.01)     **G02B 30/33** (2020.01)
**G02B 27/00** (2006.01)

(52) Cooperative Patent Classification (CPC):
**G02B 27/0172; G02B 27/0081; G02B 30/33;**
G02B 2027/0123; G02B 2027/0134;
G02B 2027/0185

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **05.08.2024  US 202418795025**

(71) Applicant: **Oomii Inc.
Grand Cayman KY1-1208 (KY)**

(72) Inventors:
• **CHENG, Sean
23144 New Taipei City (TW)**
• **LAI, Jiunn-Yiing
23144 New Taipei City (TW)**
• **CHEN, Tai-Kuo
23144 New Taipei City (TW)**

(74) Representative: **Michalski Hüttermann & Partner
Patentanwälte mbB
Kaistraße 16A
40221 Düsseldorf (DE)**

(54) **SYSTEM AND METHOD FOR MULTI-INSTANCE EMISSION FOR RETINA SCANNING BASED NEAR-EYE DISPLAY**

(57)     A multi-instance emission system for retina scanning based near-eye display is disclosed. The system comprises a plurality of light emitting units for respectively emitting collimated light signals to a first eye or a second eye of a viewer; and at least one light direction modifiers for modifying light emitting direction of the plurality of light emitting units such that optical path of a first collimated light signal and a third collimated light signal from a plurality of collimated light signals emitted by the plurality of light emitting units have optical paths or optical path extensions that converge to form a first converging point, and a second collimated light signal and a fourth collimated light signal from the plurality of collimated light signals have optical paths or optical path extensions that converge to form a second converging point.

FIG. 2

**Description**

BACKGROUND OF THE INVENTION

Field of the Invention

The present invention relates to a retina scanning based augmented reality device capable of displaying virtual images with three-dimensional (3D) perception in real space. More particularly, the present invention pertains to a retina scanning based augmented reality device with an expanded effective viewing area (eyebox) and a method for expanding effective viewing area in retina scanning based augmented reality devices.

Description of Related Art

One of the key challenges in designing head-wearable AR/VR devices is to minimize their physical size while maintaining sufficient image quality and expanding the viewer's field of view (FOV). One way to expand the field of view is to create multiple viewing positions for the eyes, allowing the eyes to receive image information from various positions or orientations. The range of viewing positions over which the images provided by the device are visible to the viewer may be referred to as the "eyebox." The size and geometry of the eyebox can greatly affect the viewer's experience; this is particularly true for retina scanning based head-wearable AR/VR devices. For example, if the eyebox is too small, the viewer may not be able to see the image produced by the head-wearable AR/VR device even when their sightline (or visual axis) deviates from the direction of the incoming image by a relatively small amount. Expanding eyebox (in other words, increasing the range or number of viewing positions of the images provided by a head-wearable AR/VR device) is often achieved through optical means. However, expanding eyebox often involves adding bulky optical components to the head-wearable AR/VR device. Therefore, it is desirable to design a system and method for expanding eyebox without sacrificing the viewer's experience or increasing the physical size of the head-wearable AR/VR device.

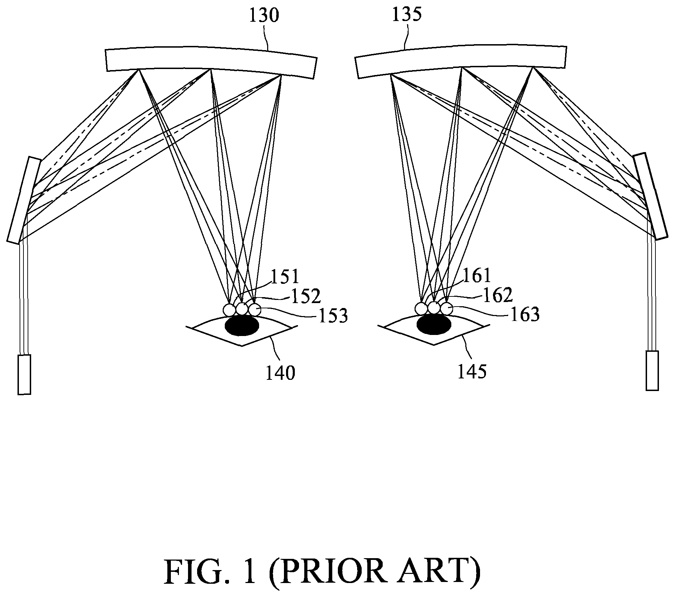

With reference to FIG. 1, many novel near-eye displays capable of creating multiple viewing positions (or viewpoints) for the viewer have been proposed. The idea is to create multiple instances from a single pixel and project these instances to several locations (viewpoints, 151, 152, 153, 161, 162, 163). When all the pixels of an image frame are projected to the respective viewpoints, the viewpoints become the locations where the viewer can receive the visual information from the plurality of pixels, thereby seeing a full image rendered by the near-eye display. Therefore, when the viewer's eyes rotate away from one viewing position, the full image can still be perceived from other viewing positions. However, this method requires the near-eye display to render multiple full images in close proximity to each other in a tight space in front of the pupil. Oftentimes, a viewpoint may undesirably overlap with an adjacent viewpoint, causing the viewer to see double images when their eyesight receives image information from two viewpoints of the image frame.

SUMMARY

The present invention introduces a novel approach to resolving the limited eyebox issue in retina scanning based display systems. In this invention, each monocular pixel is composed of multiple light instances with different incident angles. This design allows the retina to receive the light instances regardless of the eye's orientation. Consequently, the viewer can perceive the monocular pixel with a much wider eyebox, expanding the effective field of view.

This invention achieves eyebox expansion without relying on complex mechanical and optical mechanisms, significantly reducing the size and weight of retina scanning based near-eye displays. As a result, this advancement makes retina scanning based displays more commercially viable for end consumers.

The present invention also offers significant advantages over prior technologies by resolving focal rivalry and vergence accommodation conflict (VAC) in virtual and mixed reality displays In the realms of augmented reality and mixed reality, depth perception and the 3D effect of a virtual image are often achieved using parallax image technology. Typically, parallax images for a partial binocular virtual image are shown separately to the left and right eyes on a screen fixed at a certain distance from the viewer's eye. However, this distance often differs from the perceived depth of the virtual image. Additionally, when a virtual image is superimposed on a real object to create an augmented or mixed reality effect, the differing distances of the object and the screen from the viewer's eyes prevent both from being in focus simultaneously. This invention resolves these issues by providing real and accurate depth perception, enhancing the superimposition of real and virtual objects for individual users.

Unlike the conventional method for achieving eyebox expansion, which utilizes optical splitters and/or motors to change the orientation and position of optical components in retinal scanning displays, the present invention uses a plurality of light emitting units and light direction modifiers implemented on transparent substrate. Each light-emitting unit, along with its corresponding light direction modifier, can provide a light signal with a unique optical path to the retina. With multiple light emitting units, a plurality of light emitting directions can be achieved, offering an almost unlimited eyebox for the viewer. Additionally, the present invention is significantly lighter and more compact compared to conventional method.

The multi-instance emission system for retina scanning based near-eye display in accordance with the present invention comprises a plurality of light emitting units for respectively emitting collimated light signals to a first eye or a second eye of a viewer; and at least one light direction modifiers for modifying light emitting direction of the plurality of light emitting units such that optical path of a first collimated light signal and a third collimated light signal from a plurality of collimated light signals have optical paths or optical path extensions that converge to form a first converging point, and a second collimated light signal and a fourth collimated light signal from the plurality of collimated light signals have optical paths or optical path extensions that converge to form a second converging point. The first converging point is located on the optical path after entering the pupil of the first eye, the second converging point is located on the optical path after entering the pupil of the second eye. The first collimated light signal and the third collimated light signal comprise substantially the same image information, and the second collimated light signal and the fourth collimated light signal comprise substantially the same image information. The first collimated light signal, the second collimated light signal, the third collimated light signal, and the fourth collimated light signal have different optical paths.

According to the present invention, the first collimated light signal and the third collimated light signal forms a first monocular image, the second collimated light signal and the fourth collimated light signal forms a second monocular image, the viewer perceives a partial binocular image with depth perception upon receiving the first monocular image and the second monocular image, a depth of the partial binocular image perceived by the viewer is modulated by altering a distance between the first converging point and the second converging point based on an interpupillary distance of the viewer.

BRIEF DESCRIPTION OF THE DRAWINGS

FIG.1 illustrates a method for expanding eyebox in accordance to the prior art.
FIG. 2 illustrates the principle of nature of binocular vision for depth perception.
FIG. 3A illustrates the principle for rendering depth perception according to the present invention.
FIG. 3B illustrates the principle for rendering depth perception according to the present invention.
FIG. 4A illustrates a first embodiment according to the present invention.
FIG. 4B illustrates a first embodiment according to the present invention.
FIG. 5 is another figure illustrating a first embodiment according to the present invention.
FIG. 6A illustrates two light instances has a converging point exactly on the retina.
FIG. 6B illustrates two light instances has a converging point located on a side of the retina.
FIG. 6C is another figure illustrating two light instances has a converging point located on a side of the retina.
FIG. 7 illustrates the principle for eyebox and FOV expansion in accordance of the present invention.
FIG. 8 are figures illustrating the principle for eyebox and FOV expansion in accordance of the present invention.
FIG. 9A illustrates an embodiment of the present invention with three light instances for every monocular pixel.
FIG. 9B is another figure illustrating an embodiment of the present invention with three light instances for every monocular pixel.
FIG. 10 illustrates the principle for simultaneously rendering two binocular pixels with different depth perception with two light instances for every monocular pixel.
FIG. 11A illustrates the principle for simultaneously rendering two binocular pixels with different depth perception with two light instances for every monocular pixel.
FIG. 11B illustrates the principle for simultaneously rendering two binocular pixels with different depth perception with two light instances for every monocular pixel.
FIG. 12A illustrates an alternative embodiment according to the present invention.
FIG. 12B is another figure for illustrating the alternative embodiment according to the present invention.
FIG. 13A is a figure illustrating two light instances emitted within the window of persistence of vision.
FIG. 13B is another figure illustrating two light instances emitted within the window of persistence of vision.
FIG. 14 illustrates factors to be considered for arranging light emitting units according to an embodiment of the present invention.

DETAILED DESCRIPTION OF PREFERRED EMBODIMENTS

The terminology used in the description presented below is intended to be interpreted in its broadest reasonable manner, even though it is used in conjunction with a detailed description of certain specific embodiments of the technology. Certain terms may even be emphasized below; however, any terminology intended to be interpreted in any restricted manner will be specifically defined as such in this Detailed Description section.

The multi-instance emission system in accordance with the present invention is particularly advantageous for near-eye displays (NEDs). The NED mentioned in the present invention is a visual display technology designed to be worn close to the eyes, typically within 5 centimeters of the eyes. In this case, the NED is in the form of glasses, or head wearable devices. In some other embodiments, the physical dimensions of the present invention may be minimized such that it can be implemented on contact lenses.

The multi-instance emission system for retina scanning based near-eye display in accordance with the present invention is capable of directly emitting light signals toward the retina of the viewer to form a resolved image on the retina; in other words, it does not require the eyes of the viewer to focus on a specific image display to perceive the image. Conventional retina scanning based near-eye displays suffer smaller eye-box and view angle relative to waveguide based near-eye displays. To resolve this problem, it requires implementation of complex optical system. The present invention discloses system and method for a novel retina scanning based near-eye display which has simple optic design; however, it is able to produce realistic depth perception, and in the meantime, resolve the problem of limited eye-box and view angle in the conventional art.

The multi-instance emission system for retina scanning based near-eye display, in accordance with the present invention, is capable of rendering virtual images perceivable at specific positions in three-dimensional real space for a viewer. The multi-instance emission system comprises a plurality of light emitting units, each of which is configured to respectively emit a collimated light signal toward at least one eye of the viewer at a specified angle relative to the frontal plane of the viewer. The multi-instance emission system also comprises a plurality of light direction modifiers for modifying the light emitting direction of the light emitting units. According to one embodiment, light signals from several light emitting units (e.g., two, three, or four) are used to produce one pixel image of an entire image frame. In other embodiments, it is also possible to use only one light signal emitted by a single light emitting unit to produce a pixel image of an image frame (an image frame may contain for example 1280x720 pixels). In some embodiments, the light signal emitted by the light emitting unit is collimated by at least one of the light direction modifiers. The present invention does not require the light emitting unit to emit readily collimated light signal. It can rely on the light direction modifier to collimate the light signal. The key is that each of the light emitting units can only produce a partial image of an entire image frame or virtual object to be perceived by the viewer, and the light signal entering the pupil needs to be collimated.

For demonstrative purposes, in some parts of the present specification, each of the light emitting units is designated to emit the light signal of one pixel of an image frame. The light emitting unit may contain at least one light emitter (e.g., LED, micro-LED, OLED, LCD, etc.) for producing a collimated or non-collimated light signal (for a pixel) having a variety of wavelengths/colors (e.g., by mixing different colors of light from different light emitters). In some embodiments, a light emitting unit may also contain other optical elements (e.g., lens, collimator, color filter, waveguide, etc.) for modifying the basic optical properties of the emitted light signal. In the present invention, each of the light emitting units can be controlled individually and separately for emitting a light signal to the retina, regardless of the number of light emitters and the number and type of optical elements contained therein. Therefore, when there is a plurality of light emitting units, each light emitting unit can be controlled independently to emit light signal.

The plurality of light direction modifiers may be incorporated with the light emitting units (e.g., each light emitting unit comprises a light direction modifier therein) or may be provided separately from the light emitting units. In some embodiments, in addition to the optical elements for modifying the basic optical properties of the emitted light signal mentioned earlier, the multi-instance emission system for retina scanning based near-eye display may further comprise the plurality of light direction modifiers for individually modifying the light emitting direction of each of the plurality of light emitting units independently, or a light direction modifier may modify the direction of the light signals emitted by several light emitting units. In some embodiments, the light direction modifier may be a microlens, a liquid crystal spatial light modulator (LCSLM), or a flat meta-lens, etc. Each of the light direction modifiers may be provided to one light emitting unit. However, it is also possible that one light direction modifier is shared by several light emitting units, or vice versa, depending on the embodiment. In the case where the plurality of light direction modifiers are liquid crystal spatial light modulators, the liquid crystal spatial light modulator may comprise a plurality of liquid crystal cells; when at least one light emitting unit emits a light signal, the driving voltage of one of the liquid crystal cells corresponding to said light emitting unit can be changed so that the emitting light signal from the at least one light emitting unit is collimated and travels in a defined direction (the known technology of changing the driving voltage of the liquid crystal cell to alter the phase of the liquid crystal is omitted herein). In this case, the light direction modifier is able to dynamically modifying light emitting direction of the plurality of light emitting units by modulating the driving voltage at any time, creating a variety emitting angle for each light emitting unit. For rendering a virtual image or object that is moving relatives to the viewer, the light direction modifiers may modify light emitting direction of the plurality of light emitting units such that the collimated light signals are directed toward the eyes with an angle that is altering relative a frontal plane of the viewer with respectto time. The detailed method for rendering object with different depth location all be more apparent later in this discloser. In the case where the plurality of light direction modifiers is a plurality of meta-lenses, each of the meta-lenses comprises nano-structures; an incident light signal from one of the light emitting units and received by the meta-lens can be collimated and/or travel in a different direction from the originally emitted direction when interacting with the meta-lens (the fact that the flat meta-lens can affect light to travel in a different direction is well known in the art, and thus, further explanation is omitted herein). The meta-lens described herein may serve the function of refracting and/or collimating light, so as to change the direction of the light signal emitted by the corresponding light emitting unit. For example, a plurality of meta-lens may be provided so each of the light emitting unit may have at least one corresponding meta-lens for directing the emitted light to a specific direction or a specific location on the retina. It is worth mentioning that in this embodiment, at least two or three light emitting units may be provided with meta-lenses that direct their emitted light signals to a same location on the retina. There may be other ways of implementing the light direction modifiers. The present disclosure is not limited to the aforementioned examples. As long as the light direction modifiers are able to change the direction of the emitted light of the corresponding light emitting units, they can be considered under the scope of the present disclosure. In some embodiments, one light direction modifier may be responsible for altering a corresponding light emitting unit. However, it is also possible that several light direction modifiers may be responsible for altering a corresponding light emitting unit, or one light direction modifier may be responsible for altering several corresponding light emitting units, depending upon the embodiment.

The plurality of light emitting units (in addition to the light direction modifier) may be provided in front of the eyes of the viewer and emit collimated light signals directly onto the retina of the viewer. The plurality of light emitting units does not form any perceivable image along the optical path. A resolved and focused image is only produced on the retina of the viewer. Furthermore, as an example, different light emitting units may emit different light signals, respectively forming different pixels of an image frame on the retina of the viewer. Each pixel may exhibit a different color. The color of the light signal may be the result of mixing several colors of light emitted by light emitters within a single light emitting unit. That is to say, in some embodiments, a light emitting unit may contain at least one light emitter. However, the present invention is not limited to the embodiments above.

As long as each of the light emitting units can be controlled to emit light signal to the retina of the viewer with a specified angle (directional light emission) relative to the frontal plane of the viewer, or as long as each of the light emitting units can be controlled to emit light signal to a specific location on the retina of the viewer, it should be considered as encompassed by the scope of the present invention. It is worth mentioning that the retina scanning based near-eye display provides directional and/or collimated light signal to the retina, unlike the conventional waveguide based augmented reality (AR) / virtual reality (VR) near-eye displays (which provide scattered light signals to the viewer).

The multi-instance emission system for retina scanning based near-eye display in accordance with the present invention can directly emit light signals to the retina, thereby rendering a resolved and clear virtual image on the retina, so the viewer can perceive the image of a virtual object without fixating and focusing on a screen or display panel. In some cases, the viewer can even perceive a clear image via the present invention without the aid of the focusing effect of the lens of the eye (focus-free). As a result, a person with damaged eyes can also perceive images produced by the present invention, as long as part of the person's retina can still function normally.

The following describes the fundamental method utilized for rendering virtual images with three-dimensional perception in accordance with the present invention. To create a full image frame, a plurality of collimated right light signals and a plurality of collimated left light signals are emitted to the first retina (e.g., left retina) and the second retina (e.g., right retina), respectively. Each of the right collimated light signals and its corresponding left collimated light signal are received by the right retina and the left retina, and the image of each of the right collimated light signals and the corresponding left collimated light signal are fused by the human brain so the viewer can perceive a plurality of partial binocular images (e.g., binocular pixels) of the virtual image or image frame (which contains a plurality of binocular image/pixels). A full virtual image or image frame is formed by the combination of the partial binocular images (e.g., pixels). Each of the plurality of collimated right light signals has a corresponding collimated left light signal. In some embodiments, a right collimated light signal and its corresponding left collimated light signal have substantially the same image information (e.g., same color/wavelength, or intensity). In other embodiments, they may have slightly different image information (e.g., parallax image information). In the following, the right collimated light signal is assumed to have substantially the same image information as its corresponding left collimated light signal. This means both the right collimated light signal and the corresponding left collimated light signal contain the image information of the same binocular pixel; which means the right collimated light signal and the corresponding left collimated light signal render the image of a same region of the virtual image or image frame. In some cases, this may also mean both the right collimated light signal and the corresponding left collimated light signal have the same intensity or color. The right collimated light signal and the corresponding left collimated light signal form a partial binocular image which is perceivable at a specific spatial location when respectively received by the first retina and the second retina at specific locations on the first and second retinas. It is well known that the horizontal and vertical positions of a partial binocular image in 3-dimensional space perceived by the viewer are related to the horizontal and vertical positions on the first retina and the second retina where the right collimated light signal and the left collimated light signal are respectively received. In addition, according to the present invention, it has been proven that the depth position of the partial binocular image perceived by the viewer correlates to the distance between the locations on the retina where the right collimated light signal and the corresponding left collimated light signal are received.

In order to direct the light signal to a target location on the viewer's retina, and thereby manipulate the distance between the locations on the retinas where the right collimated light signal and the corresponding left collimated light signal are received, directional light signals (i.e., collimated light) are preferred in the present invention for virtual image rendering. Conventional light signals produced by waveguide based near-eye displays are less desirable because light signals emitted by such devices are scattered and require the lens of the eyes to focus the scattered light. This can create a mismatch between the perceived depth of the virtual image and the focusing location of the eyes, which is on the screen/display.

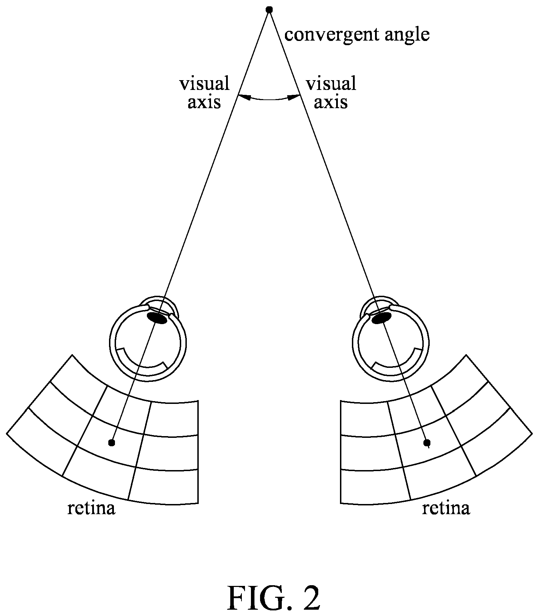

In the present application, for the convenience of illustrating the principle of human vision and retina scanning, the retina of the first eye and the second eye of the viewer are represented as matrices, each of the matrix elements corresponding to a specific horizontal and vertical location on the retina. Furthermore, only a few light instances are shown in the figures for simplicity. It is worth mentioning that the phrase "light instance" mentioned herein collectively refers to a single emission of a light pulse or light signal and its optical path traveled in space during a specific time period. Light instances are illustrated as optical paths (which are depicted as straight lines) of light signals in the figures. With reference to FIG. 2, according to natural vision, when humans look at an object, the visual axis (which is defined as the virtual line from the center of the retina (or fovea) to the center of the pupil and extending onward) of the left eye and the right eye point in the direction of the object, causing the visual axes of the eyes to converge at the location of the object. As a result, the majority of light coming from the object is received by the central retinal region (fovea) of the viewer where most of the visual cells are located. The lenses of the eyes then focus on the object based on the distance between the object and the eyes. The human brain interprets the depth of the object partially based on the convergent angle between the two visual axes of the eyes when fixating on the object. That is to say, depth perception of human binocular vision is based in part on the convergent angle between the two visual axes of the eyes. When the convergent angle increases, depth perception perceived and interpreted by human vision decreases, meaning the object is located closer to the viewer. On the other hand, when the convergent angle decreases, depth perception perceived and interpreted by human vision increases, meaning the object is located farther away from the viewer.

To have accurate depth perception, the orientation of the visual axes of the eyes needs to change (i.e., the eyes rotate toward the direction of the object) to allow the object's image to land on an area close to the center of the retinas (fovea). In the case where light from the object is received by an area outside the central region of the retinas (which means the visual axes of the eyes are not pointing at the object), depth perception is degraded. However, the viewer can still vaguely perceive the location and depth of the object. Therefore, when the viewer wants to view the object clearly, the eyes need to turn toward the object so that the light coming from the object lands close to the fovea, as shown in FIG. 2.

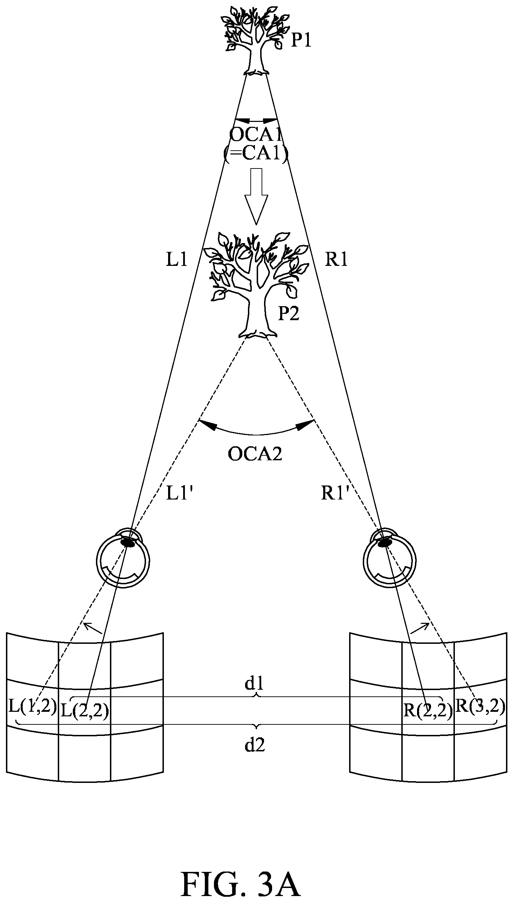

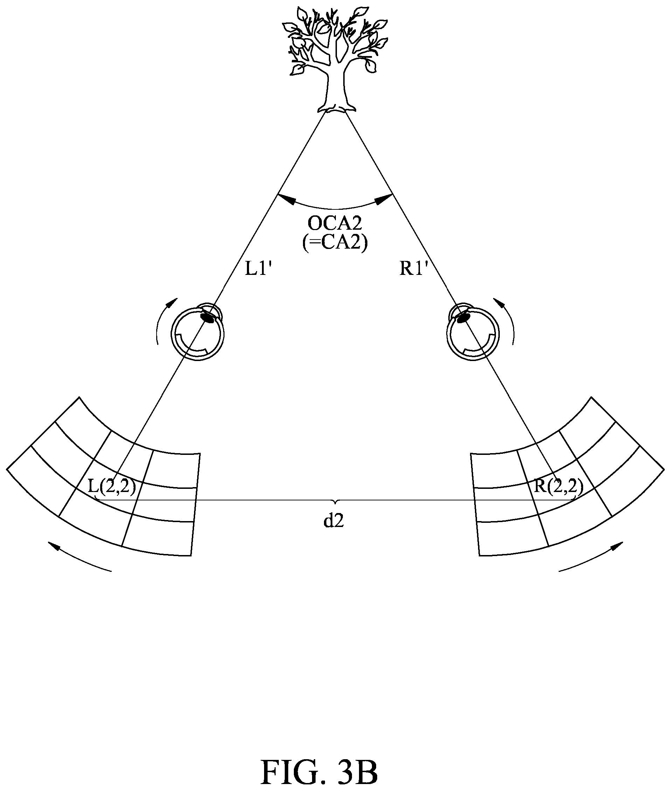

The foregoing method can be implemented in retina scanning based near-eye displays to render depth perception. With reference to FIG. 3A, the first and second retinas of the viewer are illustrated as two matrices, with L(2,2) and R(2,2) representing the center areas of the retinas. Consider a case in which the eyes of the viewer fixate on virtual object P1 at a first moment. The virtual object P1 may be a partial binocular image (e.g., a binocular pixel) or a complete binocular image (which is composed of a plurality of binocular pixels) of a virtual object. At the first moment, light instances R1 and L1 from virtual object P1 arrive at L(2,2) and R(2,2) of the first and second retinas (which are the centers of the retinas). The convergent angle between the viewer's eyes equals to CA1, which is the same as the optical convergent angle OCA1 between the light instances R1 and L1. Notice that in both FIGS. 3A and 3B, the solid lines represent the optical path of the light signals, not the visual axes of the eyes. In general, the convergent angle between the optical axes may not be the same as the optical convergent angle (the term "optical convergent angle" is defined as the convergent angle between the optical paths of the collimated light signal) After the first moment, virtual object P1 moves closer to the viewer. At a second moment, light instances R1' and L1' from virtual object P1 arrive at L(1,2) and R(3,2) (which are not at the centers of the retinas) of the first and second retinas with optical convergent angle OCA2. Since light instances R1' and L1' are not received by L(2,2) and R(2,2), the viewer needs to rotate the eyes such that the visual axes follow virtual object P1 to perceive the image clearly. As a result, the convergent angle CA1 of the visual axes increases to CA2; and in the meantime, light instances R1' and L1' are able to be received by L(2,2) and R(2,2), as shown in FIG. 3B. Notice that the depth perceived by the viewer when the viewer fixates on virtual object P1 is correlated to the distance between the locations where the two retinas receive the light instances. More particularly, the distance d1 between the locations (R(2,2) and L(2,2)) where the two eyes receive the light instances from virtual object P1 at the first moment is less than the distance d2 between the locations (R(2,2) and L(2,2)) where the two eyes receive the light instances from virtual object P1 at the second moment. Evidently, by modulating the distance between the locations where the retinas receive the left and right light signals (i.e., R1, L1, and R1', L1'), various depths of the virtual image can be perceived. Specifically, to render a virtual object closer to the viewer, a greater convergent angle of the visual axes is required. To induce the viewer to fixate on the virtual object with a greater convergent angle, the distance between the locations where the retinas receive the left and right light signals needs to be relatively greater (so the eyes of the viewer have to rotate toward the direction of the nose more for compensating the greater distance between the light signals for the light signals representing the virtual object to be received by the fovea). On the other hand, to render a virtual object farther away from the viewer, a smaller convergent angle of the visual axes is required. To induce the viewer to fixate on the virtual object with a smaller convergent angle, the distance between the locations where the retinas receive the left and right light signals needs to be relatively smaller. Notice that the left and right light signal (collimated) do not need to be project directly to the center of the retinas, the left and right light signals can be projected to area other than the center of the retinas, and allow the viewer to turn the eyes for the center of the retinas to receive the left and right light signals, depth perception is in turn created based on the change in orientation of the eyes when fixating at the image (which is related to the convergent angle). However, since every viewer may have a different interpupillary distance, it is also important to take the interpupillary distance of the user into account when modulating the distance between the locations where the retinas receive the left and right light signals.

One of the key advantages of the present invention resides in the fact that, with the utilization of collimated light signals as the light source, the present invention can produce a resolved and in-focus image directly on the viewer's retina without requiring a conventional screen or display for the viewer to fixate on. In the present invention, the visual location of each pixel in real space is rendered by projecting collimated light signals for each pixel to specific locations on the viewer's retinas.

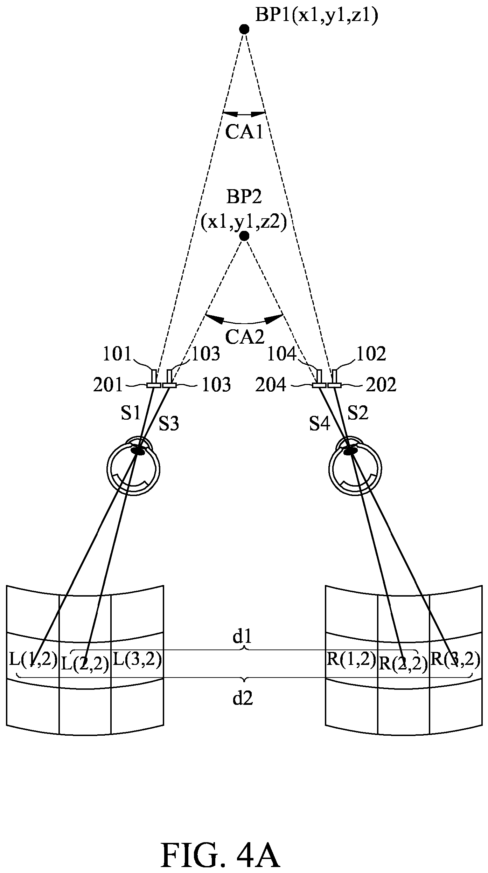

The following describes a method for rendering a virtual object with a three-dimensional contour surface. The same method can also be applied to concurrently rendering an image frame with multiple virtual objects at various depths. With reference to FIG. 4A, which illustrates the first binocular pixel BP1 and the second binocular pixel BP2 having different depths and being rendered concurrently. In this example, suppose the eyes of the viewer are initially fixating on the first binocular pixel BP1. The first binocular pixel BP1 is composed of the first collimated light signal S1 and the second collimated light signal S2; meanwhile, the second binocular pixel BP2 is composed of the third collimated light signal S3 and the fourth collimated light signal S4. The first collimated light signal S1 and the third collimated light signal S3 are projected to the left eye of the viewer; and the second collimated light signal S2 and the fourth collimated light signal S4 are projected to the right eye of the viewer. Since the eyes of the viewer fixate on the first binocular pixel BP1, the first collimated light signal S1 arrives at location L(2,2) on the left retina, which corresponds to the center of the left retina; the second collimated light signal S2 arrives at location R(2,2) on the right retina, which corresponds to the center of the right retina. The first collimated light signal S1, the second collimated light signal S2, the third collimated light signal S3, and the fourth collimated light signal S4 are respectively emitted by the first light emitting unit 101, the second light emitting unit 102, the third light emitting unit 103, and the fourth light emitting unit 104. The emitting direction of the first light emitting unit 101, the second light emitting unit 102, the third light emitting unit 103, and the fourth light emitting unit 104 are respectively affected by the first light direction modifier 201, the second light direction modifier 202, the third light direction modifier 203, and the fourth light direction modifier 204. Notice that in order for the centers of the retinas (foveae) of the eyes to receive the first collimated light signal S1 and the second collimated light signal S2, the viewer's eyes need to rotate such that the convergence angle between the visual axes of the eyes equals the convergence angle CA1. At this moment, the viewer interprets the visual depth of the first binocular pixel BP1 to be z1, based on the convergence angle CA1. In other words, to induce the viewer to fixate on the first binocular pixel BP1 with convergence angle CA1, the distance between the locations on the retinas where the first collimated light signal S1 and the second collimated light signal S2 are received needs to be d1. At this moment, the third collimated light signal S3 and the fourth collimated light signal S4 are received by location L(1,2) and location R(3,2) of the retinas. The viewer may only have vague perception of the depth and location of the second binocular pixel BP2.

With reference to 4B, suppose the viewer wants to fixate on the second binocular pixel BP2 and turns the eyes toward the second binocular pixel BP2, the third collimated light signal S3 arrives at location L(2,2) on the left retina, which corresponds to the center of the left retina; the fourth collimated light signal S4 arrives at location R(2,2) on the right retina, which corresponds to the center of the right retina. Notice that in order for the centers of the retinas (foveae) of the eyes to receive the third collimated light signal S3 and the fourth collimated light signal S4, the viewer's eyes need to rotate such that the convergence angle between the visual axes of the eyes equals the convergence angle CA2. At this moment, the viewer interprets the visual depth of the second binocular pixel BP2 to be z2, based on the convergence angle CA2. In other words, to induce the viewer to fixate on the second binocular pixel BP2 with convergence angle CA2, the distance between the locations on the retinas where the third collimated light signal S3 and the fourth collimated light signal S4 are received needs to be d2. At this moment, the first collimated light signal S1 and the second collimated light signal S2 are received by location L(3,2) and location R(1,2) of the retinas. The viewer may only have vague perception of the depth and location of the first binocular pixel BP1.

In some embodiments, the first binocular pixel BP1 and the second binocular pixel BP2 may be two separate pixels from an image frame produced by the near-eye display in accordance with the present invention. In other embodiments, the first binocular pixel BP1 and the second binocular pixel BP2 may be two separate pixels that form a portion of an image of a virtual object with a 3D surface contour. The image frame or the virtual object may be composed of a plurality of binocular pixels (e.g., 1440x1080 pixels). Regardless, each of the binocular pixels may have a unique depth position. It is apparent that the binocular pixels can be rendered according to this method so that each of which may have a unique perceivable depth to the viewer. It is worth mentioning that each of the binocular pixels in the image frame or the virtual object may be rendered concurrently; however, in some embodiments, every binocular pixel of the image frame or the virtual object may not be rendered concurrently. The binocular pixels may be rendered within the period of human persistence of vision so the viewer can still see the binocular pixels concurrently. Either cases should be considered as encompassed by the present invention.

Furthermore, according to the present invention, all of the binocular pixels are provided to the viewer concurrently (or within the period of human persistence of vision). The viewer can freely decide which portion of the image frame or virtual object to fixate upon at any time, and always perceive a clear depth perception of said portion of the image frame or virtual object. This is because the collimated light signals are projected to predetermined locations on the retinas of the viewer such that when the viewer rotates their eyes to fixate on the image produced by said collimated light signals, the eyes rotate with a desired convergent angle which in turn creates the corresponding depth perception for the image, similar to that of natural vision. This feature is particularly advantageous since it may reduce the dependency on eye-tracking mechanisms for retina scanning based near-eye displays.

The following describes a method for increasing eyebox in retina scanning based near-eye displays. It is worth mentioning that, in previous retina scanning based near-eye displays which suffer from small eyebox, a single instance of light is used for rendering a monocular pixel (namely, a pixel for the left or right eye). The monocular pixel projected to the left eye and the monocular pixel projected to the right eye are fused by the human brain to create a binocular pixel. When the eyes rotate away from the light path of any of the light instances, the light can no longer enter the viewer's eyes, and the viewer can no longer see the image of the binocular pixel. In the present invention, each partial binocular image (e.g., binocular pixel) of an image frame or virtual object is formed by multiple light instances. Furthermore, each light instance may have a different optical path and enters the eyes of the viewer at a different angle relative to the frontal plane of the viewer. Furthermore, with the depth rendering technology mentioned earlier, a multi-instance emission system can bear the capability of 3D effect rendering, which is previously thought difficult and unseen.

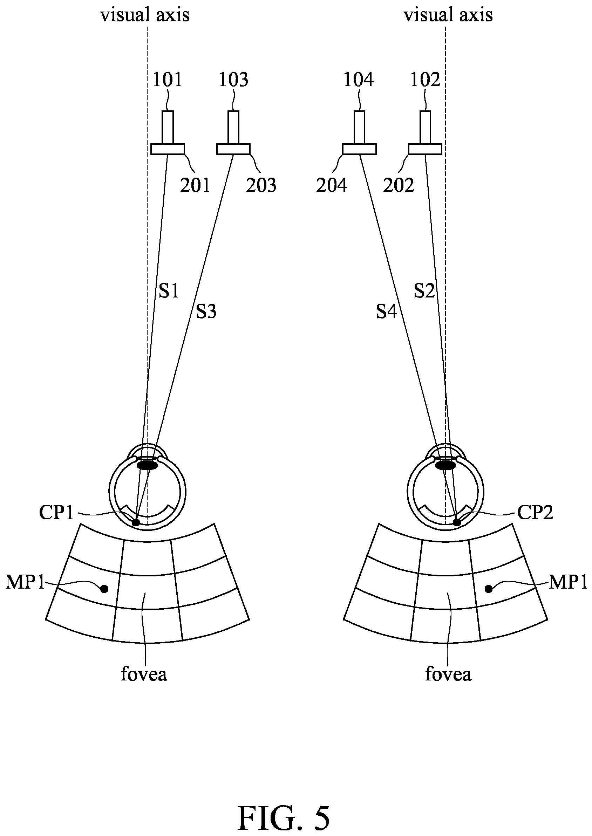

With reference to FIG. 5, the multi-instance emission system for retina scanning based near-eye display in accordance with the present invention may comprise a first light emitting unit 101, a second light emitting unit 102, a third light emitting unit 103, and a fourth light emitting unit 104 for respectively emitting a first collimated light signal S1, a second collimated light signal S2, a third collimated light signal S3, and a fourth collimated light signal S4. In the figures, only four light emitting units are shown for illustration purpose; however, a person having ordinary skill in the art may understand that they are more than four light emitting units (e.g., more than thousands) in actual implementation of the present invention. In the present example, the first collimated light signal S1 and the third collimated light signal S3 are emitted to the left eye, whereas the second collimated light signal S2 and the fourth collimated light signal S4 are emitted to the right eye. However, the present invention is not limited to this configuration. In some other embodiments, the direction of the light emission may be adjusted such that the collimated light signals are emitted to different eyes at different moments. The multi-instance emission system may further comprise at least one light direction modifier 201, 202, 203, and 204 for modifying the light emitting direction of the plurality of light emitting units 101, 102, 103, and 104 such that the optical paths of the first collimated light signal S1 and the third collimated light signal S3 from the plurality of collimated light signals from the plurality of light emitting units 101, 102, 103, and 104 (and light direction modifier 201, 202, 203, and 204) converge to form a first converging point CP1; and the optical paths of the second collimated light signal S2 and the fourth collimated light signal S4 from the plurality of collimated light signals converge to form a second converging point CP2. Notice that the first collimated light signal S1, the second collimated light signal S2, the third collimated light signal S3, and the fourth collimated light signal S4 have different optical paths. This is particularly important because it enables the eyes to receive image information from different light signals when the eyes have different orientations. The first collimated light signal S1 and the third collimated light signal S3 comprise substantially the same image information, and the second collimated light signal S2 and the fourth collimated light signal S4 comprise substantially the same image information. This means the first collimated light signal S1 and the third collimated light signal S3 carry the same image information of a first monocular image MP1 (e.g., a monocular pixel provided to the left eyes); and the second collimated light signal S2 and the fourth collimated light signal S4 carry the same image information of a second monocular image MP2 (e.g., a monocular pixel provided to the right eye). When the viewer receives both the first monocular image MP1 and second monocular image MP2, the viewer perceives a partial binocular image (e.g., a binocular pixel of an image frame or virtual object).

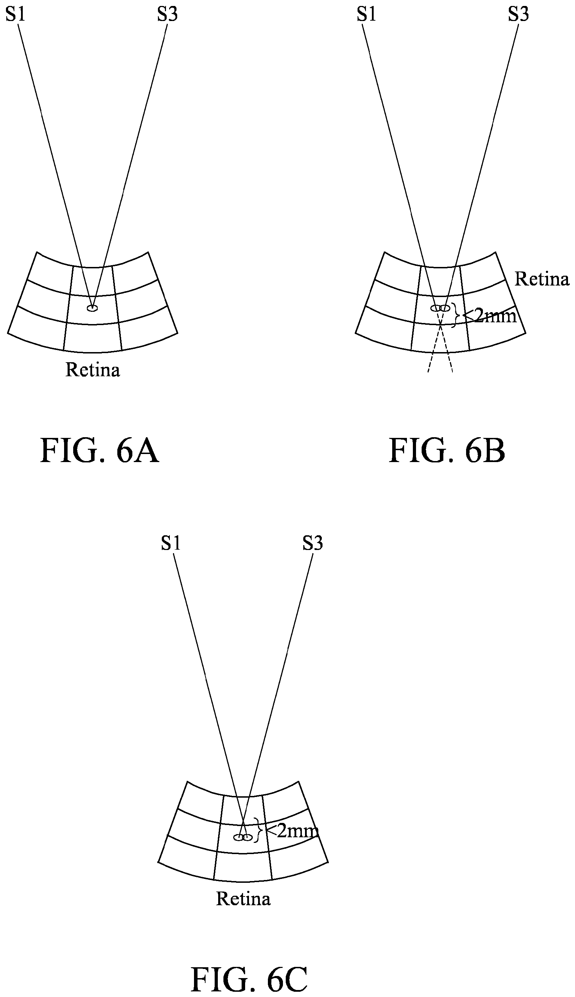

With reference to FIG. 5, the first converging point CP1 is located on the optical path after entering the pupil of the first eye, and the second converging point CP2 is located on the optical path after entering the pupil of the second eye. This means the intersection of the optical paths of the first collimated light signal S1 and the third collimated light signal S3 appears behind the pupils of the eyes. In one embodiment, in order for the viewer to see a unified and resolved image of the first monocular image MP1 and the second monocular image MP2, the first converging point CP1 and the second converging point CP2 are located substantially on the retina of the left eye CP2 and the right eye, respectively. However, since the shape of eyes may not be exactly the same for every user, and furthermore, the shape of the eyes is not usually circular, it is difficult to converge the first collimated light signal S1 and the third collimated light signal S3 (or the second collimated light signal S2 and the fourth collimated light signal S4) exactly on the surface of the retina (as shown in FIG. 6A). With reference to FIG. 6B and 6C, alternatively, as long as a converging point (the intersection between the light paths of S1 and S3, or between the light paths of S2 and S4) is located on either sides (e.g., behind or in front of) the retina within a tolerable range (smaller than ±2mm), or as long as double vision doesn't occur when both the first collimated light signal S1 and the third collimated light signal S3 are received by the retina, it should be considered as encompassed by the scope of the present invention.

With reference to FIG. 6A, in the present invention, each of the monocular images projected to the left eye and right eye is rendered by multiple light instances. Light instances rendering the same monocular image are intended to be projected to the same location on the retina to create a unified and focused image of the monocular image. With reference to FIG. 6B and 6C, in some embodiments, the light instances rendering the same monocular image are projected to locations on the retina that are in close proximity to each other such that the spatial separation (on the retina) between the light instances of the same monocular image is within a tolerance so the viewer still perceived the two light instances as one. Incident light instances form light spots on retina (as shown in the figures). It is desirable to have light spots of the light instances on the retina to be non-resolvable (to avoid double vision or distortion of the monocular image). The definition for resolved image is well defined in Rayleigh Criterion and known to people having ordinary skill in the art; thus, the description is omitted herein. In some embodiments, in order to cap the amount of energy received by the same location on the retina over a prolonged period of time (to avoid damage to the retina caused by light), the light instances of a monocular image (e.g., the first collimated light signal S1 and the third collimated light signal S3) may not be emitted concurrently; instead, they are emitted alternately or intermittently so the retina does not receive excessive energy from a single monocular image. However, the light instances of the same monocular image may need to be projected within the period of persistence of vision.

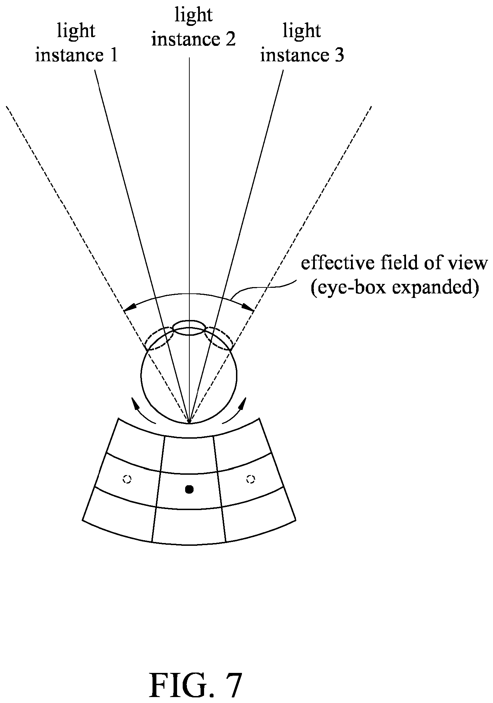

With reference to FIG. 7, suppose light instances 1, 2, and 3 containing the same image information of a monocular image are originally emitted to the center area of the retina while the eye is looking straight ahead. When the viewer's eye turns, the converging point of the light instances is received by different locations of the retina (however, the converging point stays at the same spatial location relative to the environment). As a result, the viewer perceives that the monocular image moves in the field of view (FOV) as he or she rotates the eye. This is consistent with natural vision, where, as we rotate our eyes, the objects we see shift relative to our field of view. Furthermore, since there are multiple light instances forming a single monocular image, the viewer's eye is able to receive image information of the monocular image with different orientations of the eye. This increases the eyebox and the effective field of view. Conventionally, when only one light instance is utilized for each monocular image (e.g., each monocular pixel), if the pupil rotates excessively away from the light instance, the light instance of the light signal can no longer enter the pupil; the monocular image disappears from the viewer's field of view. On the other hand, unlike the conventional retina scanning based near-eye display system, with the present invention, the viewer is still able to receive the image information of the light signal even if the pupil of the eye is pointing in different directions.

When a plurality of light instances having different incident angles relative to the retina are utilized for rendering a monocular image (e.g., a monocular pixel), the eye is able to receive the information of the monocular image from various orientations. As a result, the eyebox of the present invention can be significantly increased relative to the prior art. Furthermore, since the eye of the viewer can see the monocular image from different orientations, the monocular image is always present in the field of view during the rotation of the eye, and the viewer can see the monocular image move smoothly within the field of view relative to the rotation of the eye, similar to natural vision.

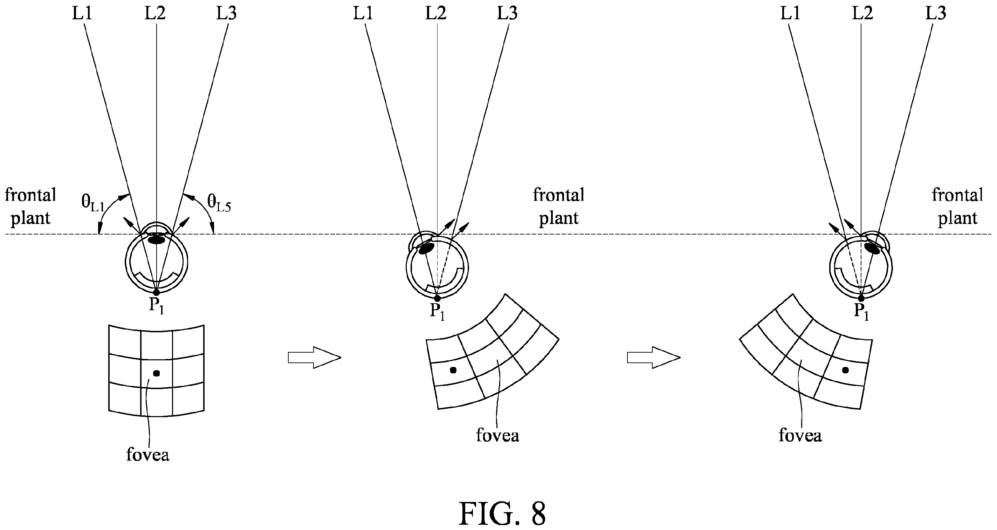

With reference to FIG. 8, in one embodiment of the present invention, three light instances (L1, L3, L5) are used for rendering a single monocular image (e.g., a monocular pixel) for one eye. Each of the light instances enters the pupil with a different incident angle relative to the frontal plane of the viewer. In some cases, to increase the FOV of the multi-instance emission system, the incident angle of the first light instance L1 relative to the frontal plane ($\theta_{L1}$) and the incident angle of the fifth light instance L5 relative to the frontal plane ($\theta_{L5}$) can be decreased. However, this may cause the first light instance L1 and the fifth light instance L5 to be unable to enter the eye when the eye looks straight ahead. In this case, the eye can still receive the information of the monocular image from light instance L3 When the eye rotates to the left, although light instances L3 and L5 are not able to enter the eye, the retina of the eye may still be able to receive light instance L1. The location where the retina receives the light instance of the monocular image changes from the fovea to the left side of the retina (so the eye perceives the monocular image moves to the right of the FOV). When the eye rotates to the right, although light instances L1 and L3 are not able to enter the eye, the retina of the eye may still be able to receive light instance L5. The location where the retina receives the light instance of the monocular image changes from the fovea to the right side of the retina (so the eye perceives the monocular image moves to the left of the FOV). Therefore, according to the present invention, regardless of the orientation of the eye, the viewer can see the image of the monocular image. This method can be applied to both eyes of the viewer.

It is worth noting that due to geometry and the rotation of the eye, the optical paths of the light instances may be disrupted. However, as shown in FIG. 8, the optical path extensions of the different light instances still converge with each other at a converging point. Therefore, the location of the converging point can be determined based on the optical path extensions of the light instances regardless.

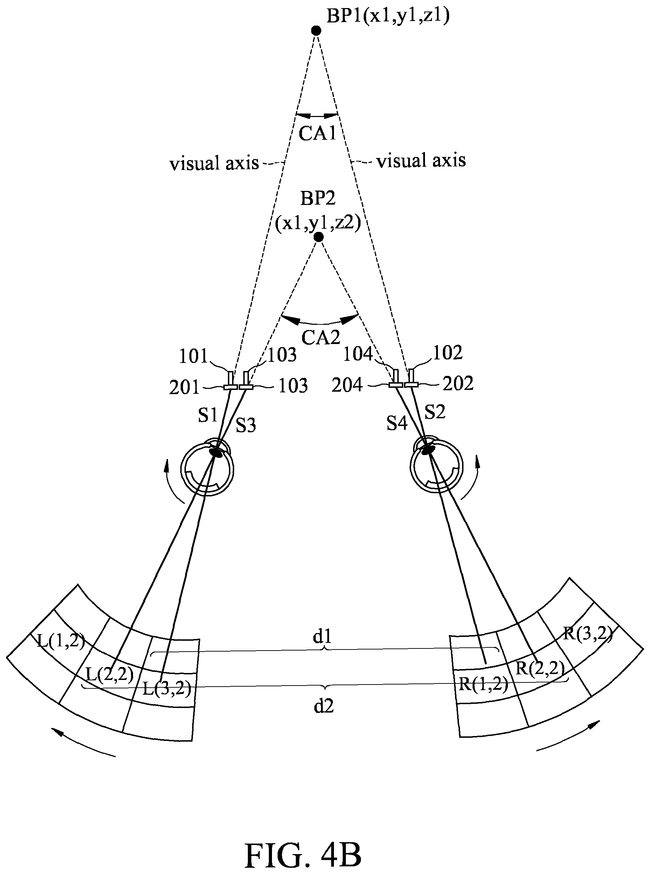

As mentioned earlier, it is known that the depth perception of a partial binocular image formed by projecting collimated light signals to the eyes correlates to the convergent angle between the visual axes of the eyes when the viewer fixates on the partial binocular image. From the perspective of the head-wearable display system, the convergent angle of the viewer's eyes (which correlates to the angle that the two visual axes of the eyes need to turn toward each other for the light signals to land on the fovea) can be manipulated by changing the distance between the first converging point and the second converging point of the light instances of the light signals. The depth perception of the partial binocular image (e.g., a binocular pixel from an entire image frame or an image of a virtual object) can be manipulated by changing the relative distance between the first converging point and the second converging point (as shown in FIG. 4B)and allowing the viewer to rotate the eyes to receive the light signal/image with the center of the retina; and in turn, creating 3D perception, depending upon the final convergent angle of the visual axes. Generally speaking, increment of the depth of the partial binocular image changes with respect to time can be modulated by decreasing the distance between the first converging point and the second converging point with respect to time, and decrement of the depth of the partial binocular image changes with respect to time is modulated by increasing the distance between the first converging point and the second converging point with respect to time. However, in reality, since the geometry and parameters of the viewer's eyes vary from person to person, several additional factors need to be taken into consideration: the interpupillary distance (IPD) of the viewer, and the actual orientation of the eyes when fixating at a particular depth for a particular viewer. For example, the locations of the first converging point and the second converging point on the retinae need to adapt to the IPD of the viewer. A same distance between the first converging point and the second converging point can render different depth perception for viewers with different IPD. According to the present invention, the variation of the depth with respect to time of the partial binocular image when the viewer perceives the right light signal and the left light signal is achieved by modulating the distance between the first converging point and the second converging point based on the IPD of the viewer; thereby, the location of the converging point can be projected to the correct location on the retina for the respective viewer. Furthermore, since retina is curved instead of flat, in some embodiments, the location of the first converging point and the second converging point on the retinae also need to be adapted and modified according to the rotation of the eyes orientation to render accurate depth perception of the binocular image. Notice that the depth perception mentioned in the present invention refers to the depth felt by the viewer when the viewer turns the eyes toward the spatial location where the partial binocular image (virtual image) or the binocular image (also virtual image) is located. This is characterized by viewer turning the center of the retina (or fovea) of the eyes such that the converging points of the light instances land on the fovea (or substantially in proximity to the fovea). At this moment, the visual axes of the eyes point toward the rendered location of the binocular image or partial binocular image. More specifically, the rendered location (the location appear to the viewer) of the binocular image or partial binocular image is where the visual axes of the eyes intersect. When the viewer looks away from the partial binocular image or the binocular image, the depth perception degraded. However, this is consistence with natural vision.

Therefore, to accurately render the depth perception of a partial binocular image or a complete binocular image, an initial calibration process may be conducted to determine the relationship between the distance between the converging points of the monocular image and the perceived depth (or convergent angle) for a particular user. For example, the IPD of the viewer needs to be determined initially to know the distance between the pupil (and roughly the foveae) of the two eyes. For example, the IPD may be determined when the viewer looks straight ahead (when the visual axes are pointing directly ahead). The viewer may then be presented with partial binocular images or a complete binocular image rendered by various distances between the first and second converging points (meaning these partial binocular images have different perceivable depths for the viewer). In one embodiment, the viewer may be asked to fixate on the images one at a time; and the corresponding orientations of the eyes (when the viewer fixates on a particular partial binocular image having a specific depth) are then determined by using eye-tracking devices. As a result, the relationship between the distance between the first and second converging points and the corresponding convergent angle (which is related to the depth perceived by the viewer) of the eyes can be determined. This relationship can be used for rendering accurate depth perception for individual users. In another embodiment, the calibration may be achieved by using real objects in the environment with the assistance of a distance measurement device. For example, the distance measurement device may measure the actual depth of a real object in the user's surroundings, and the multi-instance emission system can try to render a partial binocular image with a depth matching the depth of the real object. The viewer may be asked to fixate on the partial binocular image and adjust the perceived depth of the partial binocular image to match the depth of the real object until they are superimposed on each other, based on the viewer's preference. As the perceived depth of the partial binocular image is adjusted, the multi-instance emission system changes the distance between the converging points of the light instances rendering the partial binocular image. When the viewer finds that the perceived depth of the partial binocular image matches that of the real object, the distance between the converging points can be recorded. This allows the relationship between the perceived depth and the distance between the converging points to be determined. There are other ways to calibrate the multi-instance emission system to render accurate depth perception of the user without deviate from the spirit of the present invention.

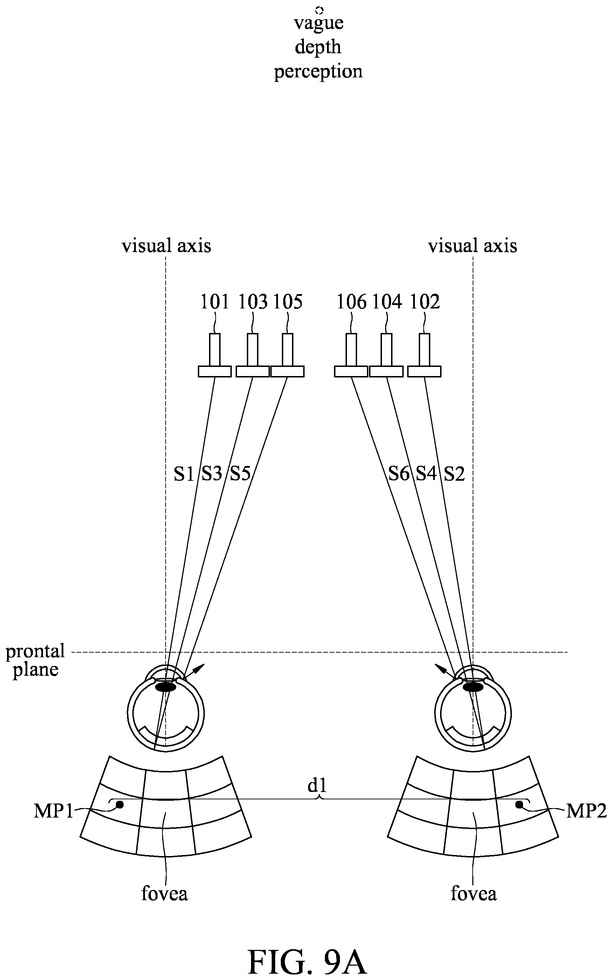

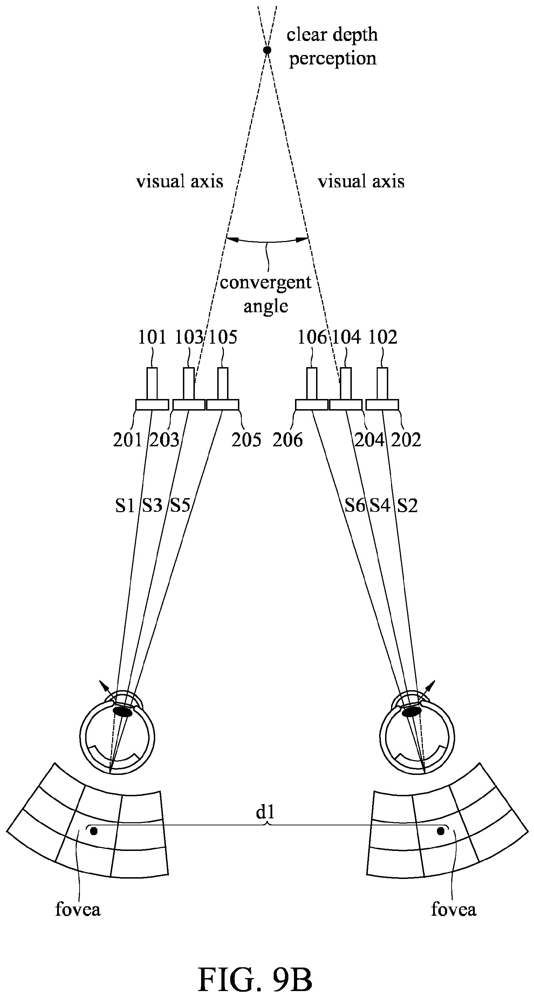

Now, the aforementioned can be applied to rendering a partial binocular pixel with depth perception. With reference to FIG. 9A and 9B, in some embodiments, the partial binocular pixel is rendered by two monocular pixels (a first left monocular pixel MP1 and a first right monocular pixel MP2). In the figures, only six light emitting units are shown for illustration purpose; however, a person having ordinary skill in the art may understand that they are more than six light emitting units (e.g., more than thousands) in actual implementation of the present invention. In the present example, both the first left monocular pixel MP1 and the first right monocular pixel MP2 are composed of three light instances. Specifically, the first left monocular pixel MP1 is rendered by the first collimated light signal S1, the third collimated light signal S3, and the fifth collimated light signal S5, which are respectively emitted by the first light emitting unit 101, the third light emitting unit 103, and the fifth light emitting unit 105. Similarly, the first right monocular pixel MP2 is rendered by the second collimated light signal S2, the fourth collimated light signal S4, and the sixth collimated light signal S6, which are respectively emitted by the second light emitting unit 102, the fourth light emitting unit 104, and the sixth light emitting unit 106. The light instances of the first left monocular pixel MP1 form a first converging point CP1 on the left retina; the light instances of the first right monocular pixel MP2 form a second converging point CP2 on the left retina. Notice that the light instances of the first left monocular pixel MP1 and the first right monocular pixel MP2 enter the eyes at different angles relative to the frontal plane of the viewer. This feature enables the eyes to see the image of the first left monocular pixel MP1 and the first right monocular pixel MP2 regardless of the orientation of the eyes. For example, suppose the eyes of the viewer are looking straight ahead initially, the visual axes of the eyes point forward, as shown in FIG. 9A. Due to the orientation of the eyes, only two of the three light instances (i.e., S1 and S3) of the first left monocular pixel MP1 can enter the pupil of the left eye, and only two of the three light instances (i.e., S2 and S4) of the first right monocular pixel MP2 can enter the pupil of the right eye. Notice the optical path extension of the fifth collimated light signal S5 still converges with the optical path of the first and third collimated light signals S1 and S3; the optical path extension of the sixth collimated light signal S6 still converges with the optical path of the second and fourth collimated light signals S2 and S4. Since the light instances are not received by the fovea, the viewer can only vaguely see the image and depth perception of the partial binocular pixel (formed by the fusion of the first left monocular pixel MP1 and the first right monocular pixel MP2). With reference to FIG. 9B, suppose the viewer turns their eyes to fixate on the partial binocular pixel; the converging points of the light instances now land on the fovea. The image of the binocular pixel and the depth perception can be perceived clearly by the viewer. Notice that in the present invention, the collimated light signals emitted by the light emitting units are configured to provide a resolved image on the retina of the viewer. As a result, the viewer can perceive the image without using the lens of the eye to focus the light signals, similar to a Maxwellian near-eye display. Since the visual axes are now turned in such a way that the fovea can receive the light instances, the depth of the binocular pixel perceived by the viewer is correlated to the convergent angle between the visual axes. The convergent angle between the visual axes is related to the spatial separation d1 between the first and second converging points CP1 and CP2. Notice that d1 remains constant in FIG. 9A and 9B, only the orientation of the eyes changes. As mentioned earlier, if the spatial separation d1 is relatively and reasonably larger, the eyes need to turn toward each other more in order for the converging points to land on the fovea, resulting in a larger convergent angle between the visual axes; therefore, the perceived image will appear to be closer, and vice versa. In FIG. 9B, only collimated light signals S3, S5, S4, and S6 can enter the pupils of the eyes, whereas the collimated light signals S1 and S2 are blocked by the eyes. The viewer can still see the image because of the implementation of the multiple light instances of the same monocular pixels.

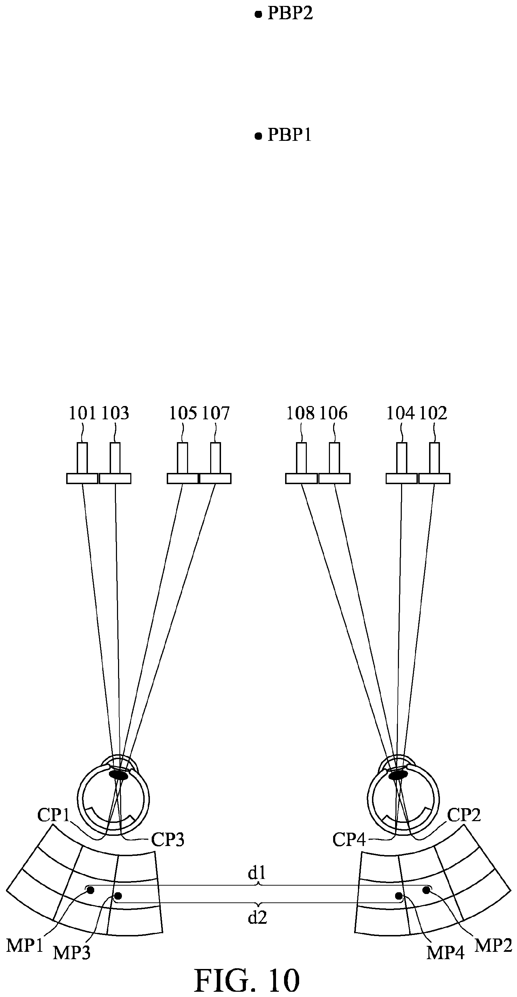

As mentioned earlier, according to some embodiments of the present invention, a partial binocular image (e.g., a binocular pixel) is formed by multiple light instances projected to two separate converging points (it can be regard as converging points pair). In a binocular image (e.g. an image frame or an image of a virtual object) consisting of a plurality of partial binocular images, each pair of first converging points (e.g., for the left eye) and second converging points (e.g., for the right eye) of each of the partial binocular images has a different distance between the respective first converging point and the second converging point. With reference to FIG. 10, two partial binocular pixels PBP1 and PBP2 are rendered. In the figure, only eight light emitting units are shown for illustration purpose; however, a person having ordinary skill in the art may understand that they are more than eight light emitting units (e.g., more than thousands) in actual implementation of the present invention. The first partial binocular pixel PBP1 is rendered by monocular pixel 1 (MP1) and monocular pixel 2 (MP2) pair; whereas the second partial binocular pixel PBP2 is rendered by monocular pixel 3 (MP3) and monocular pixel 4 (MP4) pair. In the present example, each of the monocular pixels are consisted of two light instances. Furthermore, the pair of converging points CP1 and CP 2 for the first binocular pixel PBP1 as a separational distance of d1; the pair of converging points CP 3 and CP 4 for the second binocular pixel PBP2 as a separational distance of d2. According to the aforementioned method for depth rendering, it is apparent that the perceived depth for partial binocular pixels PBP1 and PBP2 to be different. The depth of the first partial binocular pixel PBP1 and the depth of the second binocular pixel PBP2 perceived by the viewer depend upon the amount of angle which the eyes need to turn (which corresponds to the convergent angle, which varies among different viewers with different IPD) for the individual viewer's fovea to receive the first and second converging points.

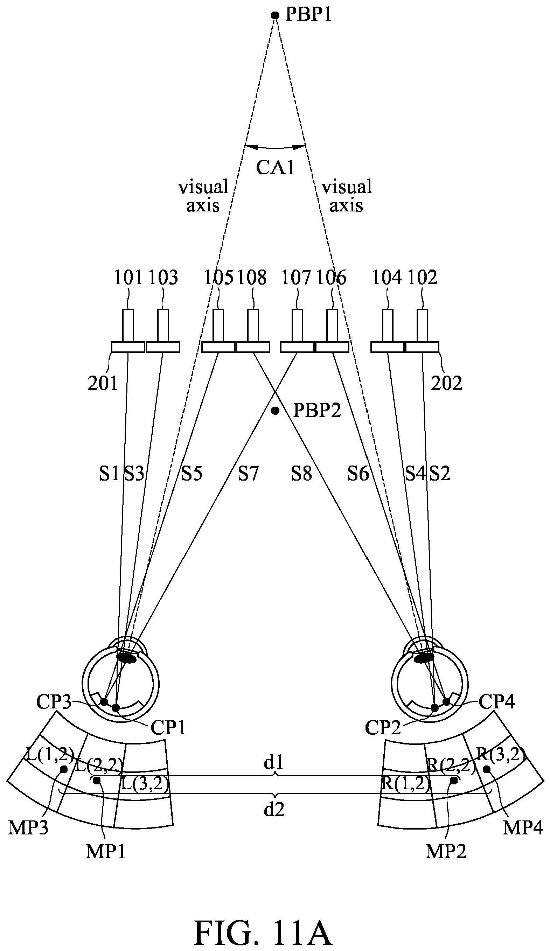

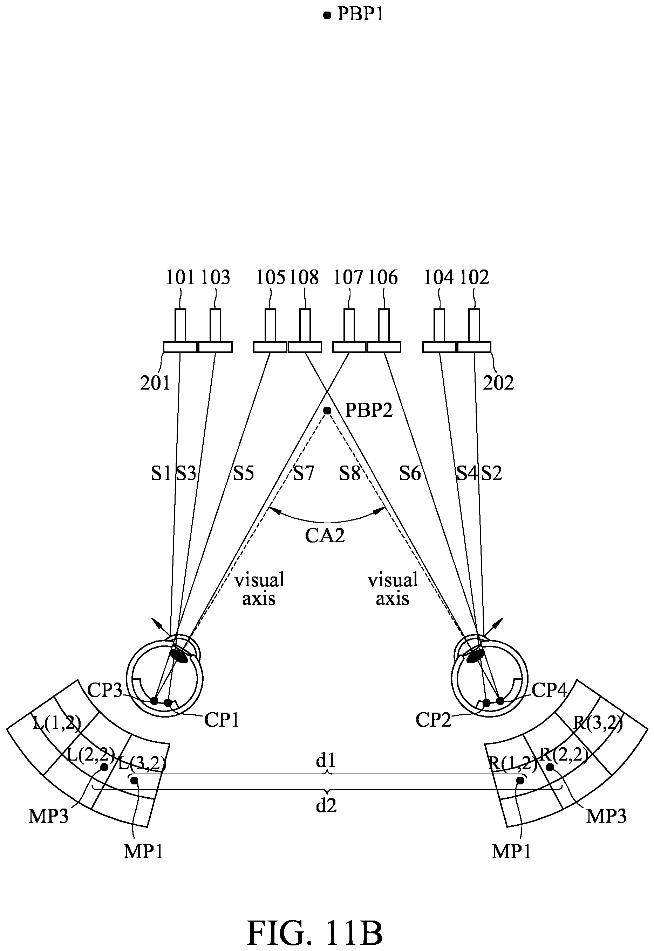

The following describes an exemplary embodiment for rendering multiple binocular pixels having different depths of an image frame or virtual object image in accordance with the present invention. With reference to FIG. 11A and 11B, two partial binocular images (a first partial binocular pixel PBP1 and a second partial binocular pixel PBP2) of an image frame are shown. Notice that the first partial binocular pixel PBP1 and the second partial binocular pixel PBP2 belong to the same image frame; therefore, they are rendered substantially at the same time. The viewer may choose to fixate at any of the two pixels at his/her freewill. The first partial binocular pixel PBP1 is rendered via the fusion of a first left monocular pixel MP1 and a first right monocular pixel MP2; the second partial binocular pixel PBP2 is rendered via the fusion of a second left monocular pixel MP3 and a second right monocular pixel MP4. In the present example, each of the monocular pixels may be composed of two light instances. For example, the first left monocular pixel MP1 is rendered by a first collimated light signal S1 and a third collimated light signal S3, which are respectively emitted from light emitting units 101 and 103. The first and third collimated light signals S1 and S3 are emitted to the first eye (e.g., left eye) of a viewer. The first right monocular pixel MP2 is rendered by a second collimated light signal S2 and a fourth collimated light signal S4, which are respectively emitted from light emitting units 102 and 104. The second and fourth collimated light signals S2 and S4 are emitted to the second eye (e.g., right eye) of a viewer. Similarly, the second left monocular pixel MP3 is rendered by a fifth collimated light signal S5 and a seventh collimated light signal S7, which are respectively emitted from light emitting units 105 and 107. The fifth and seventh collimated light signals S5 and S7 are emitted to the first eye (e.g., left eye) of a viewer. The second right monocular pixel MP4 is rendered by a sixth collimated light signal S6 and an eighth collimated light signal S8, which are respectively emitted from light emitting units 106 and 108. The sixth and eighth collimated light signals S6 and S8 are emitted to the second eye (e.g., right eye) of a viewer. The first collimated light signal S1 and the third collimated light signal S3 comprise substantially the same image information; the fifth collimated light signal S5 and the seventh collimated light signal S7 comprise substantially the same image information; the second collimated light signal S2 and the fourth collimated light signal S4 comprise substantially the same image information, and the sixth collimated light signal S6 and the eighth collimated light signal S8 comprise substantially the same image information.

The first, second, third, fourth, fifth, sixth, seventh, and eighth collimated light signals (S1, S2, S3, S4, S5, S6, S7, and S8) may be emitted concurrently or non-concurrently. If the collimated light signals are not emitted concurrently, they may be emitted within the period of persistence of vision to ensure the rendered image does not disappear from the viewer's vision. In the present embodiment, the emitting directions of the first, second, third, fourth, fifth, sixth, seventh, and eighth collimated light signals (S1, S2, S3, S4, S5, S6, S7, and S8) are modulated by at least one light direction modifier (e.g., 201, 202... etc.) such that the optical paths of the first collimated light signal S1 and the third collimated light signal S3, or their optical path extensions, converge to form a first converging point CP1; the optical paths of the second collimated light signal S2 and the fourth collimated light signal S4, or their optical path extensions, converge to form a second converging point CP2; the optical paths of the fifth collimated light signal S5 and the seventh collimated light signal S7, or their optical path extensions, converge to form a third converging point CP3; and the optical paths of the sixth collimated light signal S6 and the eighth collimated light signal S8, or their optical path extensions, converge to form a fourth converging point CP4. Similar to the previous embodiment (e.g., FIG. 5), the first converging point CP1 and the third converging point CP3 are located on the optical path after entering the pupil of the first eye (e.g., left eye), and the second converging point CP2 and the fourth converging point CP4 are located on the optical path after entering the pupil of the second eye (e.g., right eye). The first converging point CP1, the second converging point CP2, the third converging point CP3, and the fourth converging point CP4 are located sustainably on retina of the eyes, as explained in FIG. 5 and the description related to FIG. 5.

With reference to FIG. 11A, in the present embodiment, the depth of the first partial binocular pixel PBP1 is different from the depth of the second partial binocular pixel PBP2. Suppose the viewer's eyes fixate on the first partial binocular pixel PBP1 initially. The light instances of the first partial binocular pixel PBP1 are received by the fovea. Notice that the visual axes of the eyes are the imaginary lines extending from the fovea to the center of the pupil and onward, illustrated as dotted lines in the figures. The physical location in space of the first partial binocular pixel PBP1 perceived by the viewer appears to be at the location where the visual axes intersect. At this moment, the left eye and the right eye fixate at the first partial binocular pixel PBP1 with a convergence angle CA1. As mentioned earlier, the depth of the first partial binocular pixel PBP1 perceived by the viewer may be modulated by setting the distance between the first converging point CP1 and the second converging point CP2 (which is d1 in this case, as shown in the figures) based on the interpupillary distance of the viewer. The depth of the second partial binocular pixel PBP2 perceived by the viewer is modulated by setting the distance between the third converging point CP3 and the fourth converging point CP4 (which is d2 in this case, as shown in the figures) based on the interpupillary distance of the viewer. It is worth mentioning that, at this moment, the viewer can also see the image of the second partial binocular pixel PBP2, but with vague and unclear depth perception. The viewer can vaguely tell that the second partial binocular pixel PBP2 is relatively closer to the viewer than the first partial binocular pixel PBP1.

With reference to FIG. 11B, suppose the viewer wants to fixate on the second partial binocular pixel PBP2 and turn the eyes toward the second partial binocular pixel PBP2. Now the light instances of the second left monocular pixel MP3 arrive at location L(2,2) on the left retina, which corresponds to the center (or fovea) of the left retina; the light instances of the second right monocular pixel MP4 arrive at location R(2,2) on the right retina, which corresponds to the center (or fovea) of the right retina. Notice that in order for the centers of the retinas (foveae) to receive any of the light instances of the second left monocular pixel MP3 and any of the light instances of the second right monocular pixel MP4, the viewer's eyes need to rotate such that the convergence angle between the visual axes of the eyes equals the convergence angle CA2. At this moment, the viewer interprets the visual depth of the second partial binocular pixel PBP2 based on the convergence angle CA2. In other words, to induce the viewer to fixate on the second partial binocular pixel PBP2 with convergence angle CA2, the distance between the locations on the retinas where the third converging point CP3 and the fourth converging point CP4 of the light instances needs to be d2. At this moment, the light instances of the first partial binocular pixel PBP1 are received at location L(3,2) and location R(1,2) on the retinas. The viewer may only have a vague perception of the depth and location of the first partial binocular pixel PBP1. Notice that the distance d1 and d2 remains constant in both FIG. 11A and 11B.

Further with reference to FIG. 11A or 11B, in some embodiments, if the first partial binocular pixel PBP1 and the second partial binocular pixel PBP2 belong to an image of the same virtual object and it is desired to display the virtual object moving away or closer relative to the viewer, the depth of the first partial binocular pixel PBP1 perceived by the viewer may be modulated by altering the distance d1 between the first converging point CP1 and the second converging point CP2 based on the interpupillary distance of the viewer. By the same token, the depth of the second partial binocular pixel PBP2 perceived by the viewer is modulated by altering the distance d2 between the third converging point CP3 and the fourth converging point CP4 based on the interpupillary distance of the viewer. For this embodiment (to display a moving virtual object), the distance d1 between the first converging point CP1 and the second converging point CP2 and the distance d2 between the third converging point CP3 and the fourth converging point CP4 are altered concurrently. Notice that the distance d1 and d2 remain constant at all time if the image containing the first partial binocular pixel PBP1 and the second partial binocular pixel PBP2 is not moving with respect to the viewer's perspective. The distance d1 and d2 is the physical separation between the converging points in real physical space.

It is also worth mentioning that in the above embodiment, if liquid crystal spatial light modulator (LCSLM) is used as light direction modifier, or a plurality of light direction modifiers are liquid crystal spatial light modulators, the liquid crystal spatial light modulator may comprise a plurality of liquid crystal cells; when at least one light emitting unit emits a light signal, the driving voltage of one of the liquid crystal cells corresponding to said light emitting unit can be changed so that the incident light signal from the at least one light emitting unit is collimated and travels in a defined direction (the known technology of changing the driving voltage of the liquid crystal cell to alter the phase of the liquid crystal is omitted herein). Thereby, the light direction modifier is able to dynamically modifying light emitting direction of the plurality of light emitting units by modulating the driving voltage at any time. The light direction modifiers can modify light the emitting direction of the light emitting units 101 to 106, such that (for example) any of the first collimated light signal S1, the third collimated light signal S3, the fifth collimated light signal S5, or the seventh collimated light signal S7 is directed toward the first eye with angle that is altering relative a frontal plane of the viewer with respect to time; and any of the second collimated light signal S2, the fourth collimated light signal S4, the sixth collimated light signal S6, or the eighth collimated light signal S8 is directed toward the second eye with a second angle that is altering relative a frontal plane of the viewer with respect to time. This may enable each of the light emitting unit to have the capacity to emit light in different direction, resulting the total number of light emitting units needed to be implemented. Which can reduce significant manufacturing and signal controlling complexity.

In the previous embodiments, each monocular image (or pixel) consists of multiple light instances having different optical paths, entering the pupils at various angles relative to the viewer's frontal plane. When each monocular image (or pixel) is consisted of three light instances and the light instances are configured to come from the center, left, and right of the eye (as shown in FIG. 8), eyebox can be maximized and the viewer may be able to see the image of the monocular image when turning right and left. In this embodiment, no eye-tracking mechanism is needed to track the orientation of the eyes. This posts great advantage over the prior arts because in conventional retina scanning near-eye display, the display operates by projecting an image directly onto the retina of the user's eye. Eye tracking is integrated to monitor the position and movement of the user's eyes in real-time. As the user's gaze shifts, the system adjusts the position of the projector and various supporting optical elements to ensure that the light signal enters the pupil, keeping the image visible to the viewer. Conventional eye tracking mechanism are composed of complex and heavy mechanical parts to drive the supporting optical elements to the desired position. It is apparent that according to the previous embodiments of the present invention, no eye tracking mechanism is needed. The present invention greatly enhances the useability of AR glasses for the general consumers, which is not achievable through conventional technology.

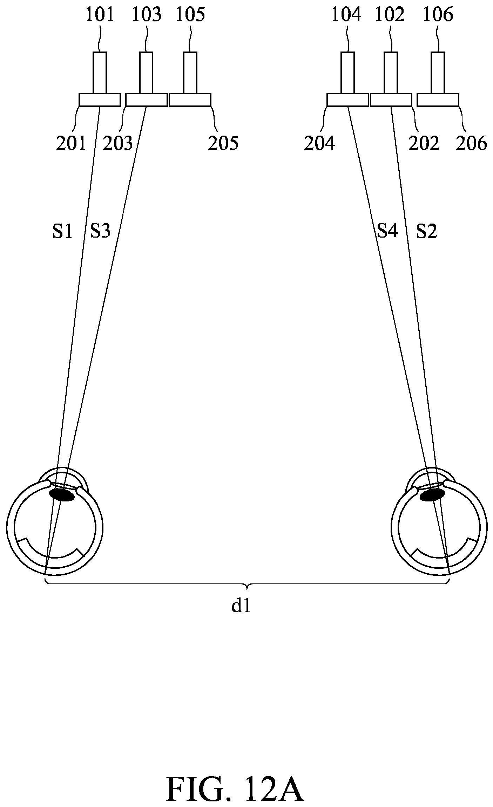

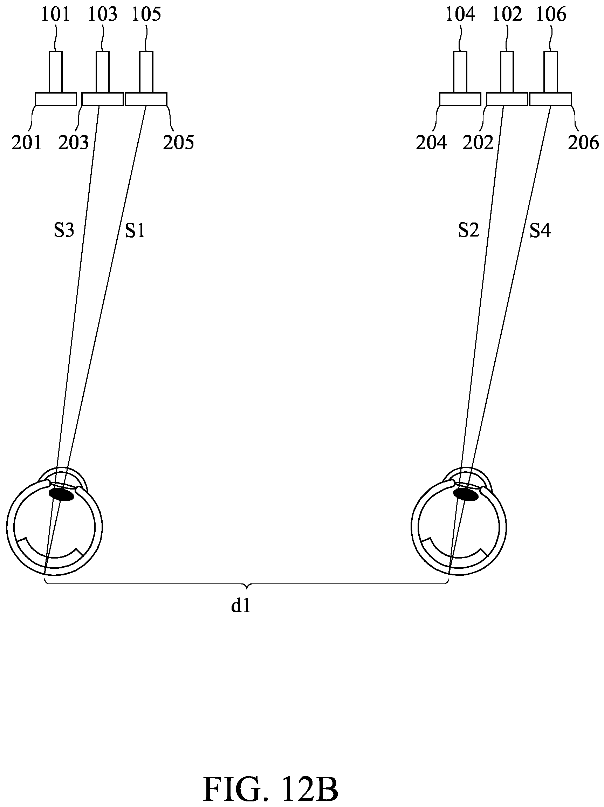

Although composing a monocular image with multiple light instances can significantly increase the eye box of a retina scanning near-eye display, there are cases where extreme eye orientations may prevent all light instances of the monocular pixel from entering the pupil. To address this issue, it may be necessary to incorporate a device for tracking the orientation of the eyes and an alternative light emitting unit control scheme, which will be detailed later in this specification. In the previous embodiments, each of the collimated light signals are emitted by a respective light emitting unit. For example, in FIG. 9A, the first, second, third, fourth, fifth, and sixth collimated light signals S1, S2, S3, S4, S5, and S6 are respectively emitted by a first light emitting unit 101, a second light emitting unit 102, a third light emitting unit 103, a fourth light emitting unit 104, a fifth light emitting unit 105, and a sixth light emitting unit 106 at a moment in time. If both of the eyes turn to the far left, the first, third, and fifth collimated light signals S1, S3, and S5 may not be able to enter the left eye; similarly, if both eyes turn to the far right, the second, fourth, and sixth collimated light signals S2, S4, and S6 may not be able to enter the right eye. With reference to FIG. 12A and FIG. 12B, both figures illustrate another embodiment of the present invention. In the present embodiment, any of the collimated light signals may be emitted by a set of light emitting units at a first moment, and by a different set of light emitting units at a second moment after the orientation of the eyes change. In FIG.12A, the eyes fixate at an arbitrary virtual image or real object in the surrounding environment, causing the eyes to have a corresponding orientation. At this moment, the first and third collimated light signals S1, S3 are projected to the left eye, and the second and fourth collimated light signals S2, S4 are projected to the right eye. Similar to the previous embodiments, the first and third collimated light signals S1, S3 are the two light instances of a left monocular pixel; and the second and fourth collimated light signals S2, S4 are the two light instances of a right monocular pixel. The left monocular pixel and the right monocular pixel are then perceived by the viewer to form a binocular pixel of an image frame or a virtual object. With eye tracking device (not shown in the figures), the orientation of the eyes is known. The first, second, third, and fourth collimated light signals S1, S2, S3, and S4 are respectively emitted by the first, second, third, and fourth light emitting units 101, 102, 103, and 104 at the first moment, as shown in FIG.12A. Notice the fifth light emitting unit 105 and the sixth light emitting unit 106 do not emit any light signal at the first moment. With reference to FIG. 12B, suppose both eyes turn to the right at a second moment, the first collimated light signal S1 originally emitted by the first light emitting unit 101 and the fourth collimated light signal S4 originally emitted by the fourth light emitting unit 104 may not be able to enter the pupil anymore due to the change in orientation of the eyes. The eye tracking device detect the orientation of the eyes and the multi-instance emission system determines the appropriate light emitting units for emitting the first collimated light signal S1 and the fourth collimated light signal S4 based upon the locations of the light emitting units and the orientation of the eyes. As example, if the system determines the fifth light emitting unit 105 is available and suitable (meaning the fifth light emitting unit 105 can emit light signal which can enter the pupil and reaching the same converging point of the previous first collimated light signal S1 and third collimated light signal S3) for emitting the first collimated light signal S1, than light emitting unit 101 may be tumed off, the fifth light emitting unit 105 becomes the light source of emitting the first collimated light signal S1, as shown in FIG. 12B. Similarly, if the system determines the sixth light emitting unit 106 is available and suitable (meaning the sixth light emitting unit 106 can emit light signal which can enter the pupil and reaching the same converging point of the previous second collimated light signal S2 and fourth collimated light signal S4) for emitting the fourth collimated light signal S4, than the fourth light emitting unit 104 may be turned off, the sixth light emitting unit 106 becomes the light source of emitting the fourth collimated light signal S4, as shown in FIG. 12B. Since the first and fourth light emitting unit 101 and 104 are turned off, the total power consumption for the system is not increased. Generally speaking, when the orientation of the eyes changes, any of the first collimated light signal S1, the second collimated light signal S2, the third collimated light signal S3, or the fourth collimated light signal S4 can be emitted by light emitting unit other than the first light emitting unit 101, the second light emitting unit 102, the third light emitting unit 103, or the fourth light emitting unit 104. Notice that the spatial locations of the first converging point (e.g., the converging point for the first and third collimated light signal S1 and S3) and the second converging point (e.g., the converging point for the second and fourth collimated light signal S2 and S4) remains substantially the same. That is to say, the distance d1 between the converging points remains constant, thereby, maintaining the depth of the image. Only the location relative to the retina of the viewer changes; thereby causing the location of the rendered image to move within the FOV of the viewer. This embodiment is extremely advantageous because it can further increase the FOV of the multi-instance emission system.

In natural vision, when the eyes rotate from one orientation to another, the object perceived by the viewer changes location in the field of view according to the rotation of the eyes. For example, when the eyes roll toward the left side of the viewer, the object appears to move to the right with respect to the field of view; but the object remains at the same three-dimensional coordinate in real space relative to the environment. Similarly, in an augmented reality (AR) or mixed reality (MR) environment created by the multi-instance emission system of the present invention, a virtual object may be configured to be fixed relative to the real space or the AR/MR environment. However, when the eyes of the viewer rotate, or when the orientation of the viewer changes, the virtual object may appear to move with respect to the field of view of the viewer. All of these functions can be achieved with the multi-instance emission system, as explained earlier. In the previous embodiments, for displaying a static virtual object relative to the real space or the AR/MR environment, the image of said virtual object is emitted to the left and right retinas of the viewer, and the converging points of the light instances have a fixed location relative to the real three-dimensional space. When the eyes of the viewer rotate and the visual axes of the left and right eyes change their orientation, the converging points of the light instances of the virtual image shift to a new location on the retinas because of the rotation of the eyes. Furthermore, since multiple light instances are used for each of the binocular pixels, the eyes are able to receive light from various orientations. As a result, the virtual object can appear to move to a different location in the field of view of the viewer. That is to say, the spatial locations of the first converging point CP1 and the second converging point CP2 remain substantially the same after the orientation of the first eye or the second eye changes relative to the initial moment. With the present invention, the viewer can have a natural vision-like user experience, which is not possible with prior art. In addition, the present invention can create partial binocular images at any given spatial locations with depths. The visual axes of the viewer are able to point directly at the location where the virtual image is rendered; thereby, the eyes can fixate and focus on said location. As a result, any depth perception can be created without the use of a display screen, which eliminates focal rivalry and vergence-accommodation conflict.

In the present invention, since each of the monocular pixels is composed of multiple light instances having different incident angles, the retina can receive the light instances regardless of the orientation of the eye. Even when the change in orientation of the eyes exceeds the original view angle provided by the light instances, the near-eye system can drive the inactive light emitting units locating on other place of the light emitting array to emit light instance with the same image information from another angle. the viewer can perceive the monocular pixels with a much wider eyebox, which means the effective field of view is expanded.

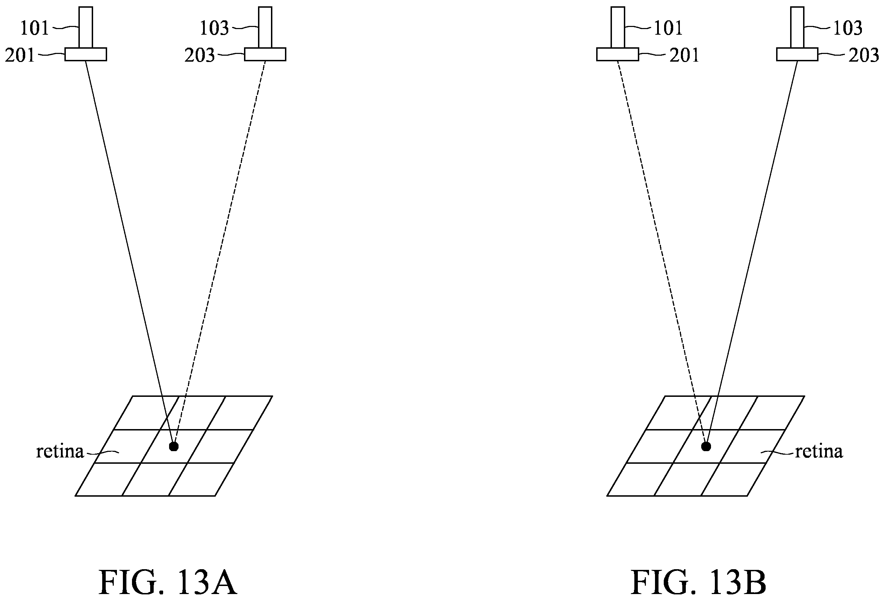

Notice that the light instances of a monocular pixel image do not need to be emitted simultaneously. In other words, the light emitting units do not need to remain "on" (e.g., continuously emitting a light signal) all the time. To reduce power consumption, a light emitting unit may emit light intermittently. However, the time period between the "power on" states of the light emitting unit must be within the window of persistence of vision so the image of the monocular pixel does not disappear for the viewer. As an example, in the case where a monocular pixel is composed of two light instances (with reference to FIG. 13A and FIG. 13B), the light emitting units emitting the two light instances do not need to be "on" at the same time (i.e., emitting two collimated light signals simultaneously). As shown in FIG. 13A, both the first light emitting unit 101 and the third light emitting unit 103 are responsible for projecting the light instances (i.e., the first collimated light signal S1 and the third collimated light signal S3) of a monocular pixel. The light path extension of both the first collimated light signal S1 and the third collimated light signal S3 forms a first converging point on the retina. At a first moment (FIG. 13A), only the first light emitting unit 101 is powered to emit the light instance (first collimated light signal S1) of the monocular pixel; meanwhile, the third light emitting unit 103 is not emitting. At a second moment (FIG. 13B), only the third light emitting unit 103 is powered to emit the light instance (third collimated light signal S3) of the monocular pixel; meanwhile, the first light emitting unit 101 is not emitting. In this embodiment, neither of the light emitting units remains "on" all the time. However, the time period between the "power on" states (or the time duration of "power off") of either of the light emitting units is shorter than the window of persistence of vision. As a result, the viewer can still see the image at all time.

In the case where the light emitting units for emitting light instances of a monocular pixel are not emitting simultaneously, the converging points of the light instances can still be determined by calculating the optical path extensions of the light instances and estimating the converging location of the optical paths. The most important factor is that the different instances of a monocular pixel need to be received by approximately the same location on the retina. This requires the converging location to be in proximity to the surface of the retina, as mentioned earlier. With reference to FIG. 6A-6C again, in the present invention, each of the light signals (or light instances) are light beams having a small cross-sectional area. Therefore, when the light instances irradiate the surface of the retina, small areas of light spots may form. In order for light instances of a single monocular pixel to be perceived by the viewer as a single unified image of the monocular pixel, the separation between the centers of the light spots needs to fulfill certain criteria. Note that the shape of the light spot may be circular, elliptical, or even rectangular... etc. As an example, in some embodiments, for the retina of the viewer to perceive that two light instances are of the same monocular pixel, the separation between the centers of the pattern (locations having the maximum light intensity) may be set to be smaller than the minimum dimension of the light spot. The minimum dimension defined here refers to the minimum distance between the center to the perimeter (or border) of the light spot. In some embodiments, the border may be defined as the location where the light intensity is 15% of the maximum intensity. In some cases, a more general approach may be taken for determining whether the two light instances have a converging point in proximity to the retina. As long as a viewer cannot perceive the two (or three) maximum light intensities from the two (or three) light instances (meaning the viewer can only see one maximum light), the two light instances are considered to have a converging point in proximity to the retina.

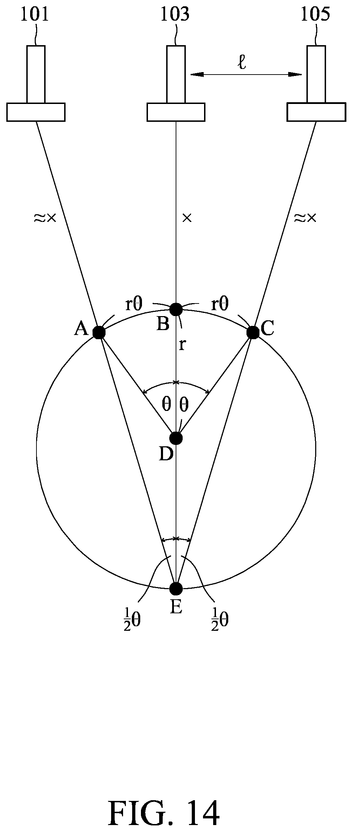

The light emitting units and light direction modifiers in this invention may be provided on a substantially transparent substrate, allowing ambient light to enter the viewer's eyes. In the multi-instance emission system for retina scanning based near-eye displays, the substrate serves as a carrier for the light-emitting units and light direction modifiers, rather than acting as a screen for the viewer to fixate on to display images. The image is formed only on the retinas. The substrates comprise a plurality of light emitting units, which are spaced a distance apart from one another. The layout and arrangement of the light emitting units may vary depending on the embodiment and will not be discussed in detail here. However, as a general guideline for the spacing between the light-emitting units, refer to FIG. 14, where the rotation track of the eye is assumed to be substantially circular with D as the center of rotation. The radius of the eye is r, and the suppose the eye rotate θ radian about the point D. The point B, A, and C correspond to the location of the center of the pupil when the eye is not rotating, and when the eye is rotating to the left and right with θ radian, respectively. And finally, x is the distance between the pupil of the eye (at point B) and a light emitting unit 103. The light emitting units 101 and 105 are provided in proximity to light emitting unit 103 and provided on the sides of the light emitting unit 103. The distance between the light emitting units 101 and 105 and the pupil is assumed to be approximately x when the pupil rotates to point A and point C, respectively. E is the point on the surface (circumference) of the eye that is directly opposite to point B. In this case, the distance l between the light emitting unit may be:

$$l = (2r+x)\,\theta/2$$

Notice that the displacement (distance) between B and C or A and B when the eye rotate θ radian is rθ. The foregoing is merely an example for the method and formula setting the distance between the light emitting units. The present invention is not limited to the above example.

The foregoing description of embodiments is provided to enable any person skilled in the art to make and use the subject matter. The method described herein can be performed in any orders. Various modifications to these embodiments will be readily apparent to those skilled in the art, and the novel principles and subject matter disclosed herein may be applied to other embodiments without the use of the innovative faculty. The claimed subject matter set forth in the claims is not intended to be limited to the embodiments shown herein but is to be accorded the widest scope consistent with the principles and novel features disclosed herein. It is contemplated that additional embodiments are within the spirit and true scope of the disclosed subject matter. Thus, it is intended that the present invention covers modifications and variations that come within the scope of the appended claims and their equivalents.

**Claims**

1.   A multi-instance emission system for retina scanning based near-eye display, comprising:

> a plurality of light emitting units for respectively emitting light signals to a first eye or a second eye of a viewer; and
> at least one light direction modifiers for modifying light emitting direction of the plurality of light emitting units or collimating the light signals such that optical path of a first collimated light signal and a third collimated light signal from a plurality of collimated light signals have optical paths or optical path extensions that converge to form a first converging point, and a second collimated light signal and a fourth collimated light signal from the plurality of collimated light signals have optical paths or optical path extensions that converge to form a second converging point,

wherein the first converging point is located on the optical path after entering the pupil of the first eye, the second converging point is located on the optical path after entering the pupil of the second eye,

wherein the first collimated light signal and the third collimated light signal comprise substantially the same image information, and the second collimated light signal and the fourth collimated light signal comprise substantially the same image information,

wherein the first collimated light signal, the second collimated light signal, the third collimated light signal, and the fourth collimated light signal have different optical paths.

2. The system of claim 1, wherein the first collimated light signal and the third collimated light signal forms a first monocular image, the second collimated light signal and the fourth collimated light signal forms a second monocular image, the viewer perceives a partial binocular image with depth perception upon receiving the first monocular image and the second monocular image, a depth of the partial binocular image perceived by the viewer is modulated by altering a distance between the first converging point and the second converging point based on an interpupillary distance of the viewer.

3. The system of claim 2, wherein the first converging point and the second converging point are located sustainably on retina of the first eye and the second eye, or the first converging point and the second converging point are located on a side of the retina.

4. The system of claim 3, wherein increment of the depth of the partial binocular image changes with respect to time is modulated by decreasing the distance between the first converging point and the second converging point with respect to time, and decrement of the depth of the partial binocular image changes with respect to time is modulated by increasing the distance between the first converging point and the second converging point with respect to time.

5. The system of claim 1, wherein the first collimated light signal, the second collimated light signal, the third collimated light signal, and the fourth collimated light signal are respectively emitted by a first light emitting unit, a second light emitting unit, a third light emitting unit, and a fourth light emitting unit at a first moment, any of the first collimated light signal, the second collimated light signal, the third collimated light signal, or the fourth collimated light signal is emitted by light emitting unit other than the first light emitting unit, the second light emitting unit, the third light emitting unit, or the fourth light emitting unit after an orientation of the first eye or the second eye changes relative to the first moment.

6. The system of claim 5, wherein spatial locations of the first converging point and the second converging point remains substantially the same after the orientation of the first eye or the second eye changes relative to the first moment.

7. The system of claim 1, wherein each of the plurality of light emitting units comprises a light emitter and a light direction modifier of the at least one light direction modifiers.

8. The system of claim 1, wherein the at least one light direction modifiers is configured to be able to dynamically modifying light emitting direction of the plurality of light emitting units.

9. The system of claim 1, wherein the at least one light direction modifiers modify light emitting direction of the plurality of light emitting units such that any of the first collimated light signal or the third collimated light signal is directed toward the first eye with a first angle that is altering relative a frontal plane of the viewer with respect to time, the at least one light direction modifiers modify light emitting direction of the plurality of light emitting units such that any of the second collimated light signal or the fourth collimated light signal is directed toward the second eye with a second angle that is altering relative a frontal plane of the viewer with respect to time.

10. A multi-instance emission method for rendering a binocular image frame for retina scanning based near-eye display, comprising:

emitting a first collimated light signal and a third collimated light signal respectively from a plurality of light emitting units to a first eye of a viewer,

emitting a second collimated light signal and a fourth collimated light signal respectively from the plurality of light emitting units to a second eye of the viewer,

emitting a fifth collimated light signal and a seventh collimated light signal respectively from the plurality of light emitting units to a first eye of a viewer,

emitting a sixth collimated light signal and an eighth collimated light signal respectively from the plurality of light emitting units to a second eye of the viewer,

wherein the first collimated light signal, the second collimated light signal, the third collimated light signal, the fourth collimated light signal, the fifth collimated light signal, the sixth collimated light signal, the seventh collimated light signal, and the eighth collimated light signal are emitted concurrently or emitted non concurrently but within a period of persistence of vision,

wherein emitting direction of the first collimated light signal, the second collimated light signal, the third collimated light signal, the fourth collimated light signal, the fifth collimated light signal, the sixth collimated light signal, the seventh collimated light signal, and the eighth collimated light signal are modulated by at least one light direction modifiers such that optical path of a first collimated light signal and a third collimated light signal have optical paths or optical path extensions that converge to form a first converging point, the second collimated light signal and a fourth collimated light signal have optical paths or optical path extensions that converge to form a second converging point, the fifth collimated light signal and a seventh collimated light signal have optical paths or optical path extensions that converge to form a third converging point, and the sixth collimated light signal and the eighth collimated light signal have optical paths or optical path extensions that converge to form a fourth converging point;

wherein the first converging point and the third converging point are located at the optical path after entering the pupil of the first eye, and the second converging point and the fourth converging point are located at the optical path after entering the pupil of the second eye,

wherein the first collimated light signal and the third collimated light signal forms a first left monocular image, the second collimated light signal and the fourth collimated light signal forms a first right monocular image, the fifth collimated light signal and the seventh collimated light signal forms a second left monocular image, the sixth collimated light signal and the eighth collimated light signal forms a second right monocular image, the viewer perceives a first partial binocular image with depth perception upon receiving the first left monocular image and the first right monocular image, the viewer perceives a second partial binocular image with depth perception upon receiving the second left monocular image and the second right monocular image,

wherein the binocular image frame comprises the first partial binocular image and the second partial binocular image, a depth of the first partial binocular image is different from a depth of the second partial binocular image.

11. The method of claim 10, the depth of the first partial binocular image perceived by the viewer is modulated by altering a distance between the first converging point and the second converging point based on an interpupillary distance of the viewer, the depth of the second partial binocular image perceived by the viewer is modulated by altering a distance between the third converging point and the fourth converging point based on the interpupillary distance of the viewer, the distance between the first converging point and the second converging point and the distance between the third converging point and the fourth converging point are altered concurrently.

12. The method of claim 11, wherein the binocular image frame comprises an image of a virtual object, the image of the virtual object comprises the first partial binocular image and the second partial binocular image.

13. The method of claim 10, wherein the first collimated light signal and the third collimated light signal comprise substantially the same image information, the fifth collimated light signal and the seventh collimated light signal comprise substantially the same image information, the second collimated light signal and the fourth collimated light signal comprise substantially the same image information, and the sixth collimated light signal and the eighth collimated light signal comprise substantially the same image information.

14. The method of claim 10, wherein the first converging point, the second converging point, the third converging point, and the fourth converging point are located sustainably on retina of the first eye and the second eye.

15. The method of claim 14, wherein the first collimated light signal, the second collimated light signal, the third collimated light signal, the fourth collimated light signal, the fifth collimated light signal, the six collimated light signal, the seventh collimated light signal, and the eighth collimated light signal are respectively emitted by a first light emitting unit, a second light emitting unit, a third light emitting unit, a fourth light emitting unit, a fifth light emitting unit, a sixth light emitting unit, a seventh light emitting unit and an eighth light emitting unit at a first moment, any of the first collimated light signal, the second collimated light signal, the third collimated light signal, the fourth collimated light signal, the fifth collimated light signal, the sixth collimated light signal, the seventh collimated light signal, or the eighth collimated light signal is emitted by different light emitting unit from the plurality of light emitting units unit after an orien-

**EP 4 692 899 A1**

tation of the first eye or the second eye changes relative to the first moment, wherein preferably spatial locations of the first converging point and the second converging point remains substantially the same after the orientation of the first eye or the second eye changes relative to the first moment.

FIG. 1 (PRIOR ART)

convergent angle

visual axis

visual axis

retina

retina

FIG. 2

FIG. 3A

OCA2
(=CA2)

L1'

R1'

L(2,2)

R(2,2)

d2

FIG. 3B

FIG. 4A

FIG. 4B

FIG. 5

S1        S3

Retina

FIG. 6A

S1        S3

Retina

}<2mm

FIG. 6B

S1        S3

}<2mm

Retina

FIG. 6C

light
instance 1

light
instance 2

light
instance 3

effective field of view
(eye-box expanded)

FIG. 7

FIG. 8

vague
depth
perception

visual axis

visual axis

101 103 105

106 104 102

S1 S3 S5

S6 S4 S2

prontal
plane

d1

MP1

MP2

fovea

fovea

FIG. 9A

FIG. 9B

FIG. 10

FIG. 11A

● PBP1

101 103    105 108    107 106    104 102

201

202

● PBP2

S1 S3    S5    S7    S8    S6    S4 S2

CA2

visual
axis

visual
axis

CP3

CP1

CP4

CP2

L(1,2)

R(3,2)

L(2,2) L(3,2)

R(1,2) R(2,2)

d1

d2

MP3

MP3

MP1

MP1

FIG. 11B

FIG. 12A

FIG. 12B

FIG. 13B

FIG. 13A

# FIG. 14

## EUROPEAN SEARCH REPORT

**Application Number**

EP 25 17 5354

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/344889 A1 (SHPUNT ALEXANDER [US]) 4 November 2021 (2021-11-04) * paragraphs [0057] - [0061]; figures 1-9 * | 1-15 | INV. G02B27/01 G02B30/33 G02B27/00 |
| X | US 2024/118550 A1 (HES IP HOLDINGS LLC [US]) 11 April 2024 (2024-04-11) * paragraphs [0001] - [0048]; figures 1-11 * | 1-4,7-14 | |
| X | US 2017/102541 A1 (TREMBLAY ERIC [CH] ET AL) 13 April 2017 (2017-04-13) * paragraphs [0024] - [0051]; figures 1-8 * | 1,7-9 | |
| A | US 2022/311992 A1 (LAI JIUNN-YIING [TW] ET AL) 29 September 2022 (2022-09-29) * figures 1-10 * | 1 | |
| A | US 2023/168513 A1 (YEH FENG-CHUN [TW] ET AL) 1 June 2023 (2023-06-01) * paragraphs [0031] - [0062]; figures 1-6 * | 1 | TECHNICAL FIELDS SEARCHED (IPC) G02B |
| A | US 2016/033771 A1 (TREMBLAY ERIC [CH] ET AL) 4 February 2016 (2016-02-04) * paragraph [0172]; figures 4,5,9 * | 1-15 | |

The present search report has been drawn up for all claims

| Place of search | Date of completion of the search | Examiner |
|---|---|---|
| Munich | 16 October 2025 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 5354

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2025

| Patent document cited in search report | Publication date | Patent family member(s) | | Publication date |
|---|---|---|---|---|
| US 2021344889 A1 | 04-11-2021 | US | 10681328 B1 | 09-06-2020 |
| | | US | 2020304771 A1 | 24-09-2020 |
| | | US | 2021344889 A1 | 04-11-2021 |
| US 2024118550 A1 | 11-04-2024 | CN | 117850025 A | 09-04-2024 |
| | | EP | 4350419 A1 | 10-04-2024 |
| | | TW | 202416013 A | 16-04-2024 |
| | | US | 2024118550 A1 | 11-04-2024 |
| US 2017102541 A1 | 13-04-2017 | US | 2017102541 A1 | 13-04-2017 |
| | | US | 2019179142 A1 | 13-06-2019 |
| | | WO | 2017115152 A2 | 06-07-2017 |
| US 2022311992 A1 | 29-09-2022 | CN | 114365027 A | 15-04-2022 |
| | | EP | 4055437 A1 | 14-09-2022 |
| | | JP | 7582675 B2 | 13-11-2024 |
| | | JP | 2023500177 A | 05-01-2023 |
| | | JP | 2024167412 A | 03-12-2024 |
| | | KR | 20220093041 A | 05-07-2022 |
| | | US | 2022311992 A1 | 29-09-2022 |
| | | WO | 2021092314 A1 | 14-05-2021 |
| US 2023168513 A1 | 01-06-2023 | CN | 115516366 A | 23-12-2022 |
| | | EP | 4136496 A1 | 22-02-2023 |
| | | US | 2023168513 A1 | 01-06-2023 |
| | | WO | 2021258078 A1 | 23-12-2021 |
| US 2016033771 A1 | 04-02-2016 | CN | 106170729 A | 30-11-2016 |
| | | EP | 2979128 A2 | 03-02-2016 |
| | | EP | 3296797 A1 | 21-03-2018 |
| | | JP | 6449236 B2 | 09-01-2019 |
| | | JP | 2016517036 A | 09-06-2016 |
| | | KR | 20150136601 A | 07-12-2015 |
| | | US | 2016033771 A1 | 04-02-2016 |
| | | US | 2017293147 A1 | 12-10-2017 |
| | | WO | 2014155288 A2 | 02-10-2014 |

EPO FORM P0459

For more details about this annex : see Official Journal of the European Patent Office, No. 12/82